# EUROPEAN PATENT SPECIFICATION

(11) **EP 2 949 813 B1**
(45) Date of publication and mention of the grant of the patent: **22.02.2017**
(21) Application number: 14169922.3
(22) Date of filing: 26.05.2014
(51) Int. Cl.: D21H 19/38, D21H 19/72

(54) **Process for preparing a surface-modified material**
Verfahren zur Herstellung von oberflächenmodifiziertem Material
Procédé de préparation d'un matériau à surface modifiée

(43) Date of publication of application: 02.12.2015
(73) Proprietor: Omya International AG, 4665 Oftringen (CH)
(72) Inventor: Bollström, Roger, 4800 Zofingen (CH); Schoelkopf, Joachim, 5727 Oberkulm (CH); Gane, Patrick Arthur Charles, 4852 Rothrist (CH)
(74) Representative: Müller-Dyck, Martina

(56) References cited:
- EP-A1- 2 626 388
- WO-A1-2009/074492

## Description

The present invention relates to surface-modified materials, a method for their preparation and their use.

Alkaline or alkaline earth carbonates, and especially calcium carbonate, are widely used in pigment coating formulations for paper or paper-like materials as well as in pigment surface coatings or paints for other materials such as metal, wood or concrete. Such coatings can improve the surface properties of the underlying substrate, can have a protective effect or can add additional functionality to the substrate. Pigment coated papers, for example, are typically optically and mechanically more homogeneous, are smoother, and more readily printable than untreated papers. By selecting the appropriate mineral type for the paper coating, paper properties such as brightness, opacity, gloss, print gloss, print contrast, porosity or smoothness can be tailored.

Calcium carbonate is widely used as pigment material in coating formulations since it is non-toxic and weather-resistant, demonstrates good whiteness and low density, low interaction with other coating components. When used as surface coating for metal substrates, it can provide an anti-corrosive effect due to its alkaline pH and its low abrasivity can prevent excessive machine wear. Furthermore, calcium carbonate is available in almost any desired particle size distribution and fineness, which is especially useful for regulating physical properties such as dispersibility, gloss, gloss retention and hiding power. However, alkaline or alkaline earth carbonates such as calcium carbonate suffer from the problem that surface coatings comprising the same often show poor wettability.

EP 2 626 388 A1 relates to a composition comprising hedgehog shaped particles, at least one binder, and at least one hydrophobising agent and/or at least one hydrophilising agent, which can be used for controlling the wettability of substrate compositions.

In recent years, the concept of using paper as a base substrate for modem lab-on-chip products became more and more popular and a number of studies on patterning methods for producing hydrophobic barriers and hydrophilic channels on paper substrates have been published. A variety of technical methods are used for this purpose involving printing technologies such as inkjet printing, screen printing or flexography, as well as microfabrication technology such as photolithography, plasma or laser treatment. It would be advantageous to use pigment coated papers as a base substrate for such microfluidic devices for several reasons: The coating layer smoothes the surface of the paper substrate and forms a new porous medium of its own on the paper surface. The increased optical and print quality characteristics of coated paper may also improve the detection or reading of colorimetric results shown on such lab-on-chip products. Pigment coatings can also feature bioactive molecules or other additives, which may be especially useful for microfluidic devices used in bioassays. However, up to now surface-coated papers have not been used successfully for producing paper-based lab-on-chip products.

WO 2010/02234 A2 discloses methods of patterning hydrophobic materials onto hydrophilic substrates using photolithography. Paper-based microfluidic devices are described in Martinez et al., Angew. Chem. Int. Ed. 2007, 46, 1318-1320, in Martinez et al., Anal. Chem. 2010, 82, 3-10, and in Martinez et al., Anal. Chem. 2008, 80, 3699-3707.

However, there remains a need in the art for structuring the surface and tuning the surface properties of a pigment coated substrate precisely and locally.

Accordingly, it is an object of the present invention to provide a method for modifying the surface properties of a pigment-coated substrate in a controlled and easy manner. It would also be desirable to provide a method, which allows to modify the surface properties locally and with high resolution and accuracy. It would also be desirable to provide a method for creating hydrophobic and hydrophilic regions on and/or within a pigment coated substrate with a high resolution. It is also an object of the present invention to provide a surface modified-material which can be utilized in a great variety of applications.

The foregoing and other objects are solved by the subject-matter as defined herein in the independent claims.

According to one aspect of the present invention, a method of manufacturing a surface-modified material is provided, comprising the following steps:
a) providing a substrate, wherein the substrate comprises on at least one side a coating layer comprising a salifiable alkaline or alkaline earth compound, and
b) applying a liquid treatment composition comprising an acid onto at least one region of the coating layer to form at least one surface-modified region on and/or within the coating layer.

According to another aspect of the present invention, a surface-modified material obtainable by a method according to the present invention is provided.

According to still another aspect of the present invention, a use of a surface-modified material according to the present invention in printing applications, in analytical applications, in diagnostic applications, in bioassays, in chemical applications, in electrical applications, in security devices, in overt or covert security elements, in brand protection, in micro lettering, in micro imaging, in decorative, artistic, or visual applications, or in packaging applications is provided.

Advantageous embodiments of the present invention are defined in the corresponding sub-claims.

According to one embodiment the substrate of step a) is prepared by (i) providing a substrate, (ii) applying a coating composition comprising a salifiable alkaline or alkaline earth compound on at least one side of the substrate to form a coating layer, and (iii) drying the coating layer. According to another embodiment the substrate is selected from the group comprising paper, cardboard, containerboard, plastic, cellophane, textile, wood, metal, glass, mica plate, nitrocellulose, or concrete, preferably paper, cardboard, containerboard, or plastic.

According to one embodiment the salifiable alkaline or alkaline earth compound is an alkaline or alkaline earth oxide, an alkaline or alkaline earth hydroxide, an alkaline or alkaline earth alkoxide, an alkaline or alkaline earth methylcarbonate, an alkaline or alkaline earth hydroxycarbonate, an alkaline or alkaline earth bicarbonate, an alkaline or alkaline earth carbonate, or a mixtures thereof, preferably the salifiable alkaline or alkaline earth compound is an alkaline or alkaline earth carbonate being preferably selected from lithium carbonate, sodium carbonate, potassium carbonate, magnesium carbonate, calcium magnesium carbonate, calcium carbonate, or mixtures thereof, more preferably the salifiable alkaline or alkaline earth compound is calcium carbonate, and most preferably the salifiable alkaline or alkaline earth compound is a ground calcium carbonate, a precipitated calcium carbonate and/or a surface-treated calcium carbonate. According to another embodiment the salifiable alkaline or alkaline earth compound is in form of particles having a weight median particle size *d*₅₀ from 15 nm to 200 µm, preferably from 20 nm to 100 µm, more preferably from 50 nm to 50 µm, and most preferably from 100 nm to 2 µm. According to still another embodiment the coating layer further comprises a binder, preferably in an amount from 1 to 50 wt.-%, based on the total weight of the salifiable alkaline or alkaline earth compound, preferably from 3 to 30 wt.-%, and more preferably from 5 to 15 wt.-%.

According to one embodiment the acid is selected from the group consisting of hydrochloric acid, sulphuric acid, sulphurous acid, phosphoric acid, citric acid, oxalic acid, acetic acid, formic acid, sulphamic acid, tartaric acid, phytic acid, boric acid, succinic acid, suberic acid, benzoic acid, and mixtures thereof, preferably the acid is selected from the group consisting of hydrochloric acid, sulphuric acid, sulphurous acid, phosphoric acid, oxalic acid, boric acid, suberic acid, succinic acid, sulphamic acid, tartaric acid, or mixtures thereof, more preferably the acid is selected from the group consisting of sulphuric acid, phosphoric acid, boric acid, suberic acid, sulphamic acid, tartaric acid, or mixtures thereof, and most preferably the acid is phosphoric acid. According to another embodiment the liquid treatment composition further comprises a printing ink, a pigmented ink, a colorant, a dye, metal ions, transition metal ions, a surfactant, a dispersant, a biocide, a corrosion inhibitor, a pharmaceutical agent, a hydrophobising agent, a wax, a salt, a polymer, a hot melt, and/or a polymerising composition.

According to one embodiment the liquid treatment composition comprises the acid in an amount from 0.1 to 100 wt.-%, based on the total weight of the liquid composition, preferably in an amount from 1 to 80 wt.-%, more preferably in an amount from 2 to 50 wt.-%, and most preferably in an amount from 5 to 30 wt.-%.

According to another embodiment the liquid treatment composition is applied by spray coating, inkjet printing, offset printing, flexographic printing, screen printing, plotting, contact stamping, rotogravure printing, spin coating, reverse gravure coating, slot coating, curtain coating, slide bed coating, film press, metered film press, blade coating, brush coating and/or a pencil, preferably by inkjet printing or spray coating.

According to one embodiment the liquid treatment composition is continuously applied to the entire coating layer. According to one embodiment the liquid treatment composition is applied to the coating layer in form of a preselected pattern, preferably in form of channels, barriers, arrays, one-dimensional bar codes, two-dimensional bar codes, three-dimensional bar codes, security marks, numbers, letters, images, or designs. According to still another embodiment the method further comprises a step c) of applying a protective layer above the at least one surface-modified region. According to still another embodiment the at least one surface-modified region obtained in step b) is washed or rinsed.

According to one embodiment the surface modified material is a tool for bioassays, a microfluidic device, a lab-on-a-chip device, a paper-based analytical and/or diagnostical tool, a separation platform, a print medium, a packaging material, a wall paint, a bar code, or a data storage.

It should be understood that for the purpose of the present invention, the following terms have the following meaning.

For the purpose of the present invention, an "acid" is defined as Brønsted-Lowry acid, that is to say, it is an H₃O⁺ ion provider. In accordance with the present invention, pKₐ, is the symbol representing the acid dissociation constant associated with a given ionisable hydrogen in a given acid, and is indicative of the natural degree of dissociation of this hydrogen from this acid at equilibrium in water at a given temperature. Such pKₐ values may be found in reference textbooks such as Harris, D. C. "Quantitative Chemical Analysis: 3rd Edition", 1991, W.H. Freeman & Co. (USA), ISBN 0-7167-2170-8.

The term "basis weight" as used in the present invention is determined according to DIN EN ISO 536:1996, and is defined as the weight in g/m².

For the purpose of the present invention, the term "coating layer" refers to a layer, covering, film, skin etc., formed, created, prepared etc., from a coating formulation which remains predominantly on one side of the substrate. The coating layer can be in direct contact with the surface of the substrate or, in case the substrate comprises one or more precoating layers and/or barrier layers, can be in direct contact with the top precoating layer or barrier layer, respectively.

"Ground calcium carbonate" (GCC) in the meaning of the present invention is a calcium carbonate obtained from natural sources, such as limestone, marble, dolomite, or chalk, and processed through a wet and/or dry treatment such as grinding, screening and/or fractionating, for example, by a cyclone or classifier.

"Modified calcium carbonate" (MCC) in the meaning of the present invention may feature a natural ground or precipitated calcium carbonate with an internal structure modification or a surface-reaction product, i.e. "surface-reacted calcium carbonate". A "surface-reacted calcium carbonate" is a material comprising calcium carbonate and insoluble, preferably at least partially crystalline, calcium salts of anions of acids on the surface. Preferably, the insoluble calcium salt extends from the surface of at least a part of the calcium carbonate. The calcium ions forming said at least partially crystalline calcium salt of said anion originate largely from the starting calcium carbonate material. MCCs are described, for example, in US 2012/0031576 A1, WO 2009/074492 A1,EP 2 264 109 A1, WO 00/39222 A1, or EP 2 264 108 A1.

"Precipitated calcium carbonate" (PCC) in the meaning of the present invention is a synthesised material, obtained by precipitation following reaction of carbon dioxide and lime in an aqueous, semi-dry or humid environment or by precipitation of a calcium and carbonate ion source in water. PCC may be in the vateritic, calcitic or aragonitic crystal form.

Throughout the present document, the "particle size" of a salifiable alkaline or alkaline earth compound is described by its distribution of particle sizes. The value *dₓ* represents the diameter relative to which x % by weight of the particles have diameters less than *dₓ*. This means that the *d*₂₀ value is the particle size at which 20 wt.-% of all particles are smaller, and the *d*₇₅ value is the particle size at which 75 wt.-% of all particles are smaller. The *d*₅₀ value is thus the weight median particle size, i.e. 50 wt.-% of all grains are bigger or smaller than this particle size. For the purpose of the present invention the particle size is specified as weight median particle size *d*₅₀ unless indicated otherwise. For determining the weight median particle size *d*₅₀ value a Sedigraph can be used.

A "specific surface area (SSA)" of a salifiable alkaline or alkaline earth compound in the meaning of the present invention is defined as the surface area of the compound divided by its mass. As used herein, the specific surface area is measured by nitrogen gas adsorption using the BET isotherm (ISO 9277:2010) and is specified in m²/g.

For the purpose of the present invention, a "rheology modifier" is an additive that changes the rheological behaviour of a slurry or a liquid coating composition to match the required specification for the coating method employed.

A "salifiable" compound in the meaning of the present invention is defined as a compound that is capable of reacting with an acid to form a salt. Examples of salifiable compounds are alkaline or alkaline earth oxides, hydroxides, alkoxides, methylcarbonates, hydroxycarbonates, bicarbonates, or carbonates.

In the meaning of the present invention, a "surface-treated calcium carbonate" is a ground, precipitated or modified calcium carbonate comprising a treatment or coating layer, e.g. a layer of fatty acids, surfactants, siloxanes, or polymers.

In the present context, the term "substrate" is to be understood as any material having a surface suitable for printing, coating or painting on, such as paper, cardboard, containerboard, plastic, cellophane, textile, wood, metal, glass, mica plate, nitrocellulose, or concrete. The mentioned examples are, however, not of limitative character.

For the purpose of the present invention, the "thickness" and "layer weight" of a layer refers to the thickness and layer weight, respectively, of the layer after the applied coating composition has been dried.

For the purpose of the present invention, the term "viscosity" or "Brookfield viscosity" refers to Brookfield viscosity. The Brookfield viscosity is for this purpose measured by a Brookfield (Typ RVT) viscometer at 202°C ± 2°C at 100 rpm using an appropriate spindle and is specified in mPa·s.

A "suspension" or "slurry" in the meaning of the present invention comprises insoluble solids and water, and optionally further additives, and usually contains large amounts of solids and, thus, is more viscous and can be of higher density than the liquid from which it is formed.

Where the term "comprising" is used in the present description and claims, it does not exclude other elements. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Where an indefinite or definite article is used when referring to a singular noun, e.g. "a", "an" or "the", this includes a plural of that noun unless something else is specifically stated.

Terms like "obtainable" or "definable" and "obtained" or "defined" are used interchangeably. This e.g. means that, unless the context clearly dictates otherwise, the term "obtained" does not mean to indicate that e.g. an embodiment must be obtained by e.g. the sequence of steps following the term "obtained" though such a limited understanding is always included by the terms "obtained" or "defined" as a preferred embodiment.

According to the present invention, a method of manufacturing a surface-modified material is provided. The method comprises the steps of (a) providing a substrate, wherein the substrate comprises on at least one side a coating layer comprising a salifiable alkaline or alkaline earth compound, and (b) applying a liquid treatment composition comprising an acid onto at least one region of the coating layer to form at least one surface-modified region on and/or within the coating layer.

In the following the details and preferred embodiments of the inventive method will be set out in more details. It is to be understood that these technical details and embodiments also apply to the inventive surface-modified material as well as to the inventive use thereof.

### Method step a)

According to step a) of the method of the present invention, a substrate is provided.

The substrate serves as a support for the coating layer and may be opaque, translucent, or transparent.

According to one embodiment, the substrate is selected from the group comprising paper, cardboard, containerboard, plastic, cellophane, textile, wood, metal, glass, mica plate, nitrocellulose, or concrete. According to a preferred embodiment, the substrate is selected from the group comprising paper, cardboard, containerboard, or plastic. However, any other material having a surface suitable for printing, coating or painting on may also be used as substrate.

According to one embodiment of the present invention, the substrate is paper, cardboard, or containerboard. Cardboard may comprise carton board or boxboard, corrugated cardboard, or non-packaging cardboard such as chromoboard, or drawing cardboard. Containerboard may encompass linerboard and/or a corrugating medium. Both linerboard and a corrugating medium are used to produce corrugated board. The paper, cardboard, or containerboard substrate can have a basis weight from 10 to 1000 g/m², from 20 to 800 g/m², from 30 to 700 g/m², or from 50 to 600 g/m².

According to another embodiment, the substrate is a plastic substrate. Suitable plastic materials are, for example, polyethylene, polypropylene, polyvinylchloride, polyesters, polycarbonate resins, or fluorine-containing resins, preferably polypropylene. Examples for suitable polyesters are poly(ethylene terephthalate), poly(ethylene naphthalate) or poly(ester diacetate). An example for a fluorine-containing resins is poly(tetrafluoro ethylene). The plastic substrate may be filled by a mineral filler, an organic pigment, an inorganic pigment, or mixtures thereof.

The substrate may consist of only one layer of the above-mentioned materials or may comprise a layer structure having several sublayers of the same material or different materials. According to one embodiment, the substrate is structured by one layer. According to another embodiment the substrate is structured by at least two sublayers, preferably three, five, or seven sublayers, wherein the sublayers can have a flat or non-flat structure, e.g. a corrugated structure. Preferably the sublayers of the substrate are made from paper, cardboard, containerboard and/or plastic.

The substrate may be permeable or impermeable for solvents, water, or mixtures thereof. According to one embodiment, the substrate is impermeable for water, solvents, or mixtures thereof. Examples for solvents aliphatic alcohols, ethers and diethers having from 4 to 14 carbon atoms, glycols, alkoxylated glycols, glycol ethers, alkoxylated aromatic alcohols, aromatic alcohols, mixtures thereof, or mixtures thereof with water.

According to the present invention, the substrate provided in step a) comprises on at least one side a coating layer comprising a salifiable alkaline or alkaline earth compound. The coating layer may be in direct contact with the surface of the substrate. In case the substrate already comprises one or more precoating layers and/or barrier layers (which will be described in more detail further below), the coating layer may be in direct contact with the top precoating layer or barrier layer, respectively.

According to one embodiment, the salifiable alkaline or alkaline earth compound is an alkaline or alkaline earth oxide, an alkaline or alkaline earth hydroxide, an alkaline or alkaline earth alkoxide, an alkaline or alkaline earth methylcarbonate, an alkaline or alkaline earth hydroxycarbonate, an alkaline or alkaline earth bicarbonate, an alkaline or alkaline earth carbonate, or a mixtures thereof. Preferably, the salifiable alkaline or alkaline earth compound is an alkaline or alkaline earth carbonate.

The alkaline or alkaline earth carbonate may be selected from lithium carbonate, sodium carbonate, potassium carbonate, magnesium carbonate, calcium magnesium carbonate, calcium carbonate, or mixtures thereof. According to a preferred embodiment, the alkaline or alkaline earth carbonate is calcium carbonate, and more preferably the alkaline or alkaline earth carbonate is a ground calcium carbonate, a precipitated calcium carbonate and/or a surface-treated calcium carbonate.

Ground (or natural) calcium carbonate (GCC) is understood to be a naturally occurring form of calcium carbonate, mined from sedimentary rocks such as limestone or chalk, or from metamorphic marble rocks. Calcium carbonate is known to exist as three types of crystal polymorphs: calcite, aragonite and vaterite. Calcite, the most common crystal polymorph, is considered to be the most stable crystal form of calcium carbonate. Less common is aragonite, which has a discrete or clustered needle orthorhombic crystal structure. Vaterite is the rarest calcium carbonate polymorph and is generally unstable. Natural calcium carbonate is almost exclusively of the calcitic polymorph, which is said to be trigonal-rhombohedral and represents the most stable of the calcium carbonate polymorphs. The term "source" of the calcium carbonate in the meaning of the present invention refers to the naturally occurring mineral material from which the calcium carbonate is obtained. The source of the calcium carbonate may comprise further naturally occurring components such as magnesium carbonate, alumino silicate etc.

According to one embodiment of the present invention, the ground calcium carbonate is selected from the group consisting of marble, chalk, dolomite, limestone and mixtures thereof.

According to one embodiment of the present invention the GCC is obtained by dry grinding. According to another embodiment of the present invention the GCC is obtained by wet grinding and optionally subsequent drying.

In general, the grinding step can be carried out with any conventional grinding device, for example, under conditions such that comminution predominantly results from impacts with a secondary body, i.e. in one or more of: a ball mill, a rod mill, a vibrating mill, a roll crusher, a centrifugal impact mill, a vertical bead mill, an attrition mill, a pin mill, a hammer mill, a pulveriser, a shredder, a de-clumper, a knife cutter, or other such equipment known to the skilled man. In case the calcium carbonate containing mineral material comprises a wet ground calcium carbonate containing mineral material, the grinding step may be performed under conditions such that autogenous grinding takes place and/or by horizontal ball milling, and/or other such processes known to the skilled man. The wet processed ground calcium carbonate containing mineral material thus obtained may be washed and dewatered by well-known processes, e.g. by flocculation, centrifugation, filtration or forced evaporation prior to drying. The subsequent step of drying may be carried out in a single step such as spray drying, or in at least two steps. It is also common that such a mineral material undergoes a beneficiation step (such as a flotation, bleaching or magnetic separation step) to remove impurities.

"Precipitated calcium carbonate" (PCC) in the meaning of the present invention is a synthesized material, generally obtained by precipitation following reaction of carbon dioxide and lime in an aqueous environment or by precipitation of a calcium and carbonate ion source in water or by precipitation of calcium and carbonate ions, for example CaCl₂ and Na₂CO₃, out of solution. Further possible ways of producing PCC are the lime soda process, or the Solvay process in which PCC is a by-product of ammonia production. Precipitated calcium carbonate exists in three primary crystalline forms: calcite, aragonite and vaterite, and there are many different polymorphs (crystal habits) for each of these crystalline forms. Calcite has a trigonal structure with typical crystal habits such as scalenohedral (S-PCC), rhombohedral (R-PCC), hexagonal prismatic, pinacoidal, colloidal (C-PCC), cubic, and prismatic (P-PCC). Aragonite is an orthorhombic structure with typical crystal habits of twinned hexagonal prismatic crystals, as well as a diverse assortment of thin elongated prismatic, curved bladed, steep pyramidal, chisel shaped crystals, branching tree, and coral or worm-like form. Vaterite belongs to the hexagonal crystal system. The obtained PCC slurry can be mechanically dewatered and dried.

According to one embodiment of the present invention, the calcium carbonate comprises one precipitated calcium carbonate. According to another embodiment of the present invention, the calcium carbonate comprises a mixture of two or more precipitated calcium carbonates selected from different crystalline forms and different polymorphs of precipitated calcium carbonate. For example, the at least one precipitated calcium carbonate may comprise one PCC selected from S-PCC and one PCC selected from R-PCC.

The salifiable alkaline or alkaline earth compound may be surface-treated material, for example, a surface-treated calcium carbonate.

A surface-treated calcium carbonate may feature a ground calcium carbonate, a modified calcium carbonate, or a precipitated calcium carbonate comprising a treatment or coating layer on its surface. For example, the calcium carbonate may be treated or coated with a hydrophobising agent such as, e.g., aliphatic carboxylic acids, salts or esters thereof, or a siloxane. Suitable aliphatic acids are, for example, C₅ to C₂₈ fatty acids such as stearic acid, palmitic acid, myristic acid, lauric acid, or a mixture thereof. The calcium carbonate may also be treated or coated to become cationic or anionic with, for example, a polyacrylate or polydiallyldimethylammonium chloride (polyDADMAC). Surface-treated calcium carbonates are, for example, described in EP 2 159 258 A1 or WO 2005/121257 A1.

According to one embodiment, the surface-treated calcium carbonate comprises a treatment layer or surface coating obtained from the treatment with fatty acids, their salts, their esters, or combinations thereof, preferably from the treatment with aliphatic C₅ to C₂₈ fatty acids, their salts, their esters, or combinations thereof, and more preferably from the treatment with ammonium stearate, calcium stearate, stearic acid, palmitic acid, myristic acid, lauric acid, or mixtures thereof. According to an exemplary embodiment, the alkaline or alkaline earth carbonate is a surface-treated calcium carbonate, preferably a ground calcium carbonate comprising a treatment layer or surface coating obtained from the treatment with a fatty acid, preferably stearic acid.

In one embodiment, the hydrophobising agent is an aliphatic carboxylic acid having a total amount of carbon atoms from C4 to C24 and/or reaction products thereof. Accordingly, at least a part of the accessible surface area of the calcium carbonate particles is covered by a treatment layer comprising an aliphatic carboxylic acid having a total amount of carbon atoms from C4 to C24 and/or reaction products thereof. The term "accessible" surface area of a material refers to the part of the material surface which is in contact with a liquid phase of an aqueous solution, suspension, dispersion or reactive molecules such as a hydrophobising agent.

The term "reaction products" of the aliphatic carboxylic acid in the meaning of the present invention refers to products obtained by contacting the at least one calcium carbonate with the at least one aliphatic carboxylic acid. Said reaction products are formed between at least a part of the applied at least one aliphatic carboxylic acid and reactive molecules located at the surface of the calcium carbonate particles.

The aliphatic carboxylic acid in the meaning of the present invention may be selected from one or more straight chain, branched chain, saturated, unsaturated and/or alicyclic carboxylic acids. Preferably, the aliphatic carboxylic acid is a monocarboxylic acid, i.e. the aliphatic carboxylic acid is characterized in that a single carboxyl group is present. Said carboxyl group is placed at the end of the carbon skeleton.

In one embodiment of the present invention, the aliphatic carboxylic acid is selected from saturated unbranched carboxylic acids, that is to say the aliphatic carboxylic acid is preferably selected from the group of carboxylic acids consisting of pentanoic acid, hexanoic acid, heptanoic acid, octanoic acid, nonanoic acid, decanoic acid, undecanoic acid, lauric acid, tridecanoic acid, myristic acid, pentadecanoic acid, palmitic acid, heptadecanoic acid, stearic acid, nonadecanoic acid, arachidic acid, heneicosylic acid, behenic acid, tricosylic acid, lignoceric acid and mixtures thereof.

In another embodiment of the present invention, the aliphatic carboxylic acid is selected from the group consisting of octanoic acid, decanoic acid, lauric acid, myristic acid, palmitic acid, stearic acid, arachidic acid and mixtures thereof. Preferably, the aliphatic carboxylic acid is selected from the group consisting of myristic acid, palmitic acid, stearic acid and mixtures thereof. For example, the aliphatic carboxylic acid is stearic acid.

Additionally or alternatively, the hydrophobising agent can be at least one mono-substituted succinic anhydride consisting of succinic anhydride mono-substituted with a group selected from a linear, branched, aliphatic and cyclic group having a total amount of carbon atoms from C2 to C30 in the substituent. Accordingly, at least a part of the accessible surface area of the calcium carbonate particles is covered by a treatment layer comprising at least one mono-substituted succinic anhydride consisting of succinic anhydride mono-substituted with a group selected from a linear, branched, aliphatic and cyclic group having a total amount of carbon atoms from C2 to C30 in the substituent and/or reaction products thereof.

The term "reaction products" of the mono-substituted succinic anhydride in the meaning of the present invention refers to products obtained by contacting the calcium carbonate with the at least one mono-substituted succinic anhydride. Said reaction products are formed between at least a part of the applied at least one mono-substituted succinic anhydride and reactive molecules located at the surface of the calcium carbonate particles.

For example, the at least one mono-substituted succinic anhydride consists of succinic anhydride mono-substituted with one group being a linear alkyl group having a total amount of carbon atoms from C2 to C30, preferably from C3 to C20 and most preferably from C4 to C18 in the substituent or a branched alkyl group having a total amount of carbon atoms from C3 to C30, preferably from C3 to C20 and most preferably from C4 to C18 in the substituent.

For example, the at least one mono-substituted succinic anhydride consists of succinic anhydride mono-substituted with one group being a linear alkyl group having a total amount of carbon atoms from C2 to C30, preferably from C3 to C20 and most preferably from C4 to C18 in the substituent. Additionally or alternatively, the at least one mono-substituted succinic anhydride consists of succinic anhydride mono-substituted with one group being a branched alkyl group having a total amount of carbon atoms from C3 to C30, preferably from C3 to C20 and most preferably from C4 to C18 in the substituent.

The term "alkyl" in the meaning of the present invention refers to a linear or branched, saturated organic compound composed of carbon and hydrogen. In other words, "alkyl mono-substituted succinic anhydrides" are composed of linear or branched, saturated hydrocarbon chains containing a pendant succinic anhydride group.

In one embodiment of the present invention, the at least one mono-substituted succinic anhydride is at least one linear or branched alkyl mono-substituted succinic anhydride. For example, the at least one alkyl mono-substituted succinic anhydride is selected from the group comprising ethylsuccinic anhydride, propylsuccinic anhydride, butylsuccinic anhydride, triisobutyl succinic anhydride, pentylsuccinic anhydride, hexylsuccinic anhydride, heptylsuccinic anhydride, octylsuccinic anhydride, nonylsuccinic anhydride, decyl succinic anhydride, dodecyl succinic anhydride, hexadecanyl succinic anhydride, octadecanyl succinic anhydride, and mixtures thereof.

It is appreciated that e.g. the term "butylsuccinic anhydride" comprises linear and branched butylsuccinic anhydride(s). One specific example of linear butylsuccinic anhydride(s) is n-butylsuccinic anhydride. Specific examples of branched butylsuccinic anhydride(s) are iso-butylsuccinic anhydride, sec-butylsuccinic anhydride and/or tert-butylsuccinic anhydride.

Furthermore, it is appreciated that e.g. the term "hexadecanyl succinic anhydride" comprises linear and branched hexadecanyl succinic anhydride(s). One specific example of linear hexadecanyl succinic anhydride(s) is n-hexadecanyl succinic anhydride. Specific examples of branched hexadecanyl succinic anhydride(s) are 14-methylpentadecanyl succinic anhydride, 13-methylpentadecanyl succinic anhydride, 12-methylpentadecanyl succinic anhydride, 11-methylpentadecanyl succinic anhydride, 10-methylpentadecanyl succinic anhydride, 9-methylpentadecanyl succinic anhydride, 8-methylpentadecanyl succinic anhydride, 7-methylpentadecanyl succinic anhydride, 6-methylpentadecanyl succinic anhydride, 5-methylpentadecanyl succinic anhydride, 4-methylpentadecanyl succinic anhydride, 3-methylpentadecanyl succinic anhydride, 2-methylpentadecanyl succinic anhydride, 1-methylpentadecanyl succinic anhydride, 13-ethylbutadecanyl succinic anhydride, 12-ethylbutadecanyl succinic anhydride, 11-ethylbutadecanyl succinic anhydride, 10-ethylbutadecanyl succinic anhydride, 9-ethylbutadecanyl succinic anhydride, 8-ethylbutadecanyl succinic anhydride, 7-ethylbutadecanyl succinic anhydride, 6-ethylbutadecanyl succinic anhydride, 5-ethylbutadecanyl succinic anhydride, 4-ethylbutadecanyl succinic anhydride, 3-ethylbutadecanyl succinic anhydride, 2-ethylbutadecanyl succinic anhydride, 1-ethylbutadecanyl succinic anhydride, 2-butyldodecanyl succinic anhydride, 1-hexyldecanyl succinic anhydride, 1-hexyl-2-decanyl succinic anhydride, 2-hexyldecanyl succinic anhydride, 6,12-dimethylbutadecanyl succinic anhydride, 2,2-diethyldodecanyl succinic anhydride, 4,8,12-trimethyltridecanyl succinic anhydride, 2,2,4,6,8-pentamethylundecanyl succinic anhydride, 2-ethyl-4-methyl-2-(2-methylpentyl)-heptyl succinic anhydride and/or 2-ethyl-4,6-dimethyl-2-propylnonyl succinic anhydride.

Furthermore, it is appreciated that e.g. the term "octadecanyl succinic anhydride" comprises linear and branched octadecanyl succinic anhydride(s). One specific example of linear octadecanyl succinic anhydride(s) is n-octadecanyl succinic anhydride. Specific examples of branched hexadecanyl succinic anhydride(s) are 16-methylheptadecanyl succinic anhydride, 15-methylheptadecanyl succinic anhydride, 14-methylheptadecanyl succinic anhydride, 13-methylheptadecanyl succinic anhydride, 12-methylheptadecanyl succinic anhydride, 11-methylheptadecanyl succinic anhydride, 10-methylheptadecanyl succinic anhydride, 9-methylheptadecanyl succinic anhydride, 8-methylheptadecanyl succinic anhydride, 7-methylheptadecanyl succinic anhydride, 6-methylheptadecanyl succinic anhydride, 5-methylheptadecanyl succinic anhydride, 4-methylheptadecanyl succinic anhydride, 3-methylheptadecanyl succinic anhydride, 2-methylheptadecanyl succinic anhydride, 1-methylheptadecanyl succinic anhydride, 14-ethylhexadecanyl succinic anhydride, 13-ethylhexadecanyl succinic anhydride, 12-ethylhexadecanyl succinic anhydride, 11-ethylhexadecanyl succinic anhydride, 10-ethylhexadecanyl succinic anhydride, 9-ethylhexadecanyl succinic anhydride, 8-ethylhexadecanyl succinic anhydride, 7-ethylhexadecanyl succinic anhydride, 6-ethylhexadecanyl succinic anhydride, 5-ethylhexadecanyl succinic anhydride, 4-ethylhexadecanyl succinic anhydride, 3-ethylhexadecanyl succinic anhydride, 2-ethylhexadecanyl succinic anhydride, 1-ethylhexadecanyl succinic anhydride, 2-hexyldodecanyl succinic anhydride, 2-heptylundecanyl succinic anhydride, iso-octadecanyl succinic anhydride and/or 1-octyl-2-decanyl succinic anhydride.

In one embodiment of the present invention, the at least one alkyl mono-substituted succinic anhydride is selected from the group comprising butylsuccinic anhydride, hexylsuccinic anhydride, heptylsuccinic anhydride, octylsuccinic anhydride, hexadecanyl succinic anhydride, octadecanyl succinic anhydride, and mixtures thereof.

In one embodiment of the present invention, the at least one mono-substituted succinic anhydride is one kind of alkyl mono-substituted succinic anhydride. For example, the one alkyl mono-substituted succinic anhydride is butylsuccinic anhydride. Alternatively, the one alkyl mono-substituted succinic anhydride is hexylsuccinic anhydride. Alternatively, the one alkyl mono-substituted succinic anhydride is heptylsuccinic anhydride or octylsuccinic anhydride. Alternatively, the one alkyl mono-substituted succinic anhydride is hexadecanyl succinic anhydride. For example, the one alkyl mono-substituted succinic anhydride is linear hexadecanyl succinic anhydride such as n-hexadecanyl succinic anhydride or branched hexadecanyl succinic anhydride such as 1-hexyl-2-decanyl succinic anhydride. Alternatively, the one alkyl mono-substituted succinic anhydride is octadecanyl succinic anhydride. For example, the one alkyl mono-substituted succinic anhydride is linear octadecanyl succinic anhydride such as n-octadecanyl succinic anhydride or branched octadecanyl succinic anhydride such as iso-octadecanyl succinic anhydride or 1-octyl-2-decanyl succinic anhydride.

In one embodiment of the present invention, the one alkyl mono-substituted succinic anhydride is butylsuccinic anhydride such as n-butylsuccinic anhydride.

In one embodiment of the present invention, the at least one mono-substituted succinic anhydride is a mixture of two or more kinds of alkyl mono-substituted succinic anhydrides. For example, the at least one mono-substituted succinic anhydride is a mixture of two or three kinds of alkyl mono-substituted succinic anhydrides.

In one embodiment of the present invention, the at least one mono-substituted succinic anhydride consists of succinic anhydride mono-substituted with one group being a linear alkenyl group having a total amount of carbon atoms from C2 to C30, preferably from C3 to C20 and most preferably from C4 to C18 in the substituent or a branched alkenyl group having a total amount of carbon atoms from C3 to C30, preferably from C4 to C20 and most preferably from C4 to C18 in the substituent.

The term "alkenyl" in the meaning of the present invention refers to a linear or branched, unsaturated organic compound composed of carbon and hydrogen. Said organic compound further contains at least one double bond in the substituent, preferably one double bond. In other words, "alkenyl mono-substituted succinic anhydrides" are composed of linear or branched, unsaturated hydrocarbon chains containing a pendant succinic anhydride group. It is appreciated that the term "alkenyl" in the meaning of the present invention includes the cis and trans isomers.

In one embodiment of the present invention, the at least one mono-substituted succinic anhydride is at least one linear or branched alkenyl mono-substituted succinic anhydride. For example, the at least one alkenyl mono-substituted succinic anhydride is selected from the group comprising ethenylsuccinic anhydride, propenylsuccinic anhydride, butenylsuccinic anhydride, triisobutenyl succinic anhydride, pentenylsuccinic anhydride, hexenylsuccinic anhydride, heptenylsuccinic anhydride, octenylsuccinic anhydride, nonenylsuccinic anhydride, decenyl succinic anhydride, dodecenyl succinic anhydride, hexadecenyl succinic anhydride, octadecenyl succinic anhydride, and mixtures thereof.

Accordingly, it is appreciated that e.g. the term "hexadecenyl succinic anhydride" comprises linear and branched hexadecenyl succinic anhydride(s). One specific example of linear hexadecenyl succinic anhydride(s) is n-hexadecenyl succinic anhydride such as 14-hexadecenyl succinic anhydride, 13-hexadecenyl succinic anhydride, 12-hexadecenyl succinic anhydride, 11-hexadecenyl succinic anhydride, 10-hexadecenyl succinic anhydride, 9-hexadecenyl succinic anhydride, 8-hexadecenyl succinic anhydride, 7-hexadecenyl succinic anhydride, 6-hexadecenyl succinic anhydride, 5-hexadecenyl succinic anhydride, 4-hexadecenyl succinic anhydride, 3-hexadecenyl succinic anhydride and/or 2-hexadecenyl succinic anhydride. Specific examples of branched hexadecenyl succinic anhydride(s) are 14-methyl-9-pentadecenyl succinic anhydride, 14-methyl-2-pentadecenyl succinic anhydride, 1-hexyl-2-decenyl succinic anhydride and/or iso-hexadecenyl succinic anhydride.

Furthermore, it is appreciated that e.g. the term "octadecenyl succinic anhydride" comprises linear and branched octadecenyl succinic anhydride(s). One specific example of linear octadecenyl succinic anhydride(s) is n-octadecenyl succinic anhydride such as 16-octadecenyl succinic anhydride, 15-octadecenyl succinic anhydride, 14-octadecenyl succinic anhydride, 13-octadecenyl succinic anhydride, 12-octadecenyl succinic anhydride, 11-octadecenyl succinic anhydride, 10-octadecenyl succinic anhydride, 9-octadecenyl succinic anhydride, 8-octadecenyl succinic anhydride, 7-octadecenyl succinic anhydride, 6-octadecenyl succinic anhydride, 5-octadecenyl succinic anhydride, 4-octadecenyl succinic anhydride, 3-octadecenyl succinic anhydride and/or 2-octadecenyl succinic anhydride. Specific examples of branched octadecenyl succinic anhydride(s) are 16-methyl-9-heptadecenyl succinic anhydride, 16-methyl-7-heptadecenyl succinic anhydride, 1-octyl-2-decenyl succinic anhydride and/or iso-octadecenyl succinic anhydride.

In one embodiment of the present invention, the at least one alkenyl mono-substituted succinic anhydride is selected from the group comprising hexenylsuccinic anhydride, octenylsuccinic anhydride, hexadecenyl succinic anhydride, octadecenyl succinic anhydride, and mixtures thereof.

In one embodiment of the present invention, the at least one mono-substituted succinic anhydride is one alkenyl mono-substituted succinic anhydride. For example, the one alkenyl mono-substituted succinic anhydride is hexenylsuccinic anhydride. Alternatively, the one alkenyl mono-substituted succinic anhydride is octenylsuccinic anhydride. Alternatively, the one alkenyl mono-substituted succinic anhydride is hexadecenyl succinic anhydride. For example, the one alkenyl mono-substituted succinic anhydride is linear hexadecenyl succinic anhydride such as n-hexadecenyl succinic anhydride or branched hexadecenyl succinic anhydride such as 1-hexyl-2-decenyl succinic anhydride. Alternatively, the one alkenyl mono-substituted succinic anhydride is octadecenyl succinic anhydride. For example, the one alkyl mono-substituted succinic anhydride is linear octadecenyl succinic anhydride such as n-octadecenyl succinic anhydride or branched octadecenyl succinic anhydride such iso-octadecenyl succinic anhydride, or 1-octyl-2-decenyl succinic anhydride.

In one embodiment of the present invention, the one alkenyl mono-substituted succinic anhydride is linear octadecenyl succinic anhydride such as n-octadecenyl succinic anhydride. In another embodiment of the present invention, the one alkenyl mono-substituted succinic anhydride is linear octenylsuccinic anhydride such as n-octenylsuccinic anhydride.

If the at least one mono-substituted succinic anhydride is one alkenyl mono-substituted succinic anhydride, it is appreciated that the one alkenyl mono-substituted succinic anhydride is present in an amount of ≥ 95 wt.-% and preferably of ≥ 96.5 wt.-%, based on the total weight of the at least one mono-substituted succinic anhydride.

In one embodiment of the present invention, the at least one mono-substituted succinic anhydride is a mixture of two or more kinds of alkenyl mono-substituted succinic anhydrides. For example, the at least one mono-substituted succinic anhydride is a mixture of two or three kinds of alkenyl mono-substituted succinic anhydrides.

In one embodiment of the present invention, the at least one mono-substituted succinic anhydride is a mixture of two or more kinds of alkenyl mono-substituted succinic anhydrides comprising linear hexadecenyl succinic anhydride(s) and linear octadecenyl succinic anhydride(s). Alternatively, the at least one mono-substituted succinic anhydride is a mixture of two or more kinds of alkenyl mono-substituted succinic anhydrides comprising branched hexadecenyl succinic anhydride(s) and branched octadecenyl succinic anhydride(s). For example, the one or more hexadecenyl succinic anhydride is linear hexadecenyl succinic anhydride like n-hexadecenyl succinic anhydride and/or branched hexadecenyl succinic anhydride like 1-hexyl-2-decenyl succinic anhydride. Additionally or alternatively, the one or more octadecenyl succinic anhydride is linear octadecenyl succinic anhydride like n-octadecenyl succinic anhydride and/or branched octadecenyl succinic anhydride like iso-octadecenyl succinic anhydride and/or 1-octyl-2-decenyl succinic anhydride.

It is also appreciated that the at least one mono-substituted succinic anhydride may be a mixture of at least one alkyl mono-substituted succinic anhydrides and at least one alkenyl mono-substituted succinic anhydrides.

If the at least one mono-substituted succinic anhydride is a mixture of at least one alkyl mono-substituted succinic anhydrides and at least one alkenyl mono-substituted succinic anhydrides, it is appreciated that the alkyl substituent of the of at least one alkyl mono-substituted succinic anhydrides and the alkenyl substituent of the of at least one alkenyl mono-substituted succinic anhydrides are preferably the same. For example, the at least one mono-substituted succinic anhydride is a mixture of ethylsuccinic anhydride and ethenylsuccinic anhydride. Alternatively, the at least one mono-substituted succinic anhydride is a mixture of propylsuccinic anhydride and propenylsuccinic anhydride. Alternatively, the at least one mono-substituted succinic anhydride is a mixture of butylsuccinic anhydride and butenylsuccinic anhydride. Alternatively, the at least one mono-substituted succinic anhydride is a mixture of triisobutyl succinic anhydride and triisobutenyl succinic anhydride. Alternatively, the at least one mono-substituted succinic anhydride is a mixture of pentylsuccinic anhydride and pentenylsuccinic anhydride. Alternatively, the at least one mono-substituted succinic anhydride is a mixture of hexylsuccinic anhydride and hexenylsuccinic anhydride. Alternatively, the at least one mono-substituted succinic anhydride is a mixture of heptylsuccinic anhydride and heptenylsuccinic anhydride. Alternatively, the at least one mono-substituted succinic anhydride is a mixture of octylsuccinic anhydride and octenylsuccinic anhydride. Alternatively, the at least one mono-substituted succinic anhydride is a mixture of nonylsuccinic anhydride and nonenylsuccinic anhydride. Alternatively, the at least one mono-substituted succinic anhydride is a mixture of decyl succinic anhydride and decenyl succinic anhydride. Alternatively, the at least one mono-substituted succinic anhydride is a mixture of dodecyl succinic anhydride and dodecenyl succinic anhydride. Alternatively, the at least one mono-substituted succinic anhydride is a mixture of hexadecanyl succinic anhydride and hexadecenyl succinic anhydride. For example, the at least one mono-substituted succinic anhydride is a mixture of linear hexadecanyl succinic anhydride and linear hexadecenyl succinic anhydride or a mixture of branched hexadecanyl succinic anhydride and branched hexadecenyl succinic anhydride. Alternatively, the at least one mono-substituted succinic anhydride is a mixture of octadecanyl succinic anhydride and octadecenyl succinic anhydride. For example, the at least one mono-substituted succinic anhydride is a mixture of linear octadecanyl succinic anhydride and linear octadecenyl succinic anhydride or a mixture of branched octadecanyl succinic anhydride and branched octadecenyl succinic anhydride.

In one embodiment of the present invention, the at least one mono-substituted succinic anhydride is a mixture of nonylsuccinic anhydride and nonenylsuccinic anhydride.

If the at least one mono-substituted succinic anhydride is a mixture of at least one alkyl mono-substituted succinic anhydrides and at least one alkenyl mono-substituted succinic anhydrides, the weight ratio between the at least one alkyl mono-substituted succinic anhydride and the at least one alkenyl mono-substituted succinic anhydride is between 90:10 and 10:90 (wt.-%/wt.-%). For example, the weight ratio between the at least one alkyl mono-substituted succinic anhydride and the at least one alkenyl mono-substituted succinic anhydride is between 70:30 and 30:70 (wt.-% / wt.-%) or between 60:40 and 40:60.

Additionally or alternatively, the hydrophobising agent may be a phosphoric acid ester blend. Accordingly, at least a part of the accessible surface area of the calcium carbonate particles is covered by a treatment layer comprising a phosphoric acid ester blend of one or more phosphoric acid mono-ester and/or reaction products thereof and one or more phosphoric acid di-ester and/or reaction products thereof.

The term "reaction products" of the phosphoric acid mono-ester and one or more phosphoric acid di-ester in the meaning of the present invention refers to products obtained by contacting the calcium carbonate with the at least one phosphoric acid ester blend. Said reaction products are formed between at least a part of the applied phosphoric acid ester blend and reactive molecules located at the surface of the calcium carbonate particles.

The term "phosphoric acid mono-ester" in the meaning of the present invention refers to an o-phosphoric acid molecule mono-esterified with one alcohol molecule selected from unsaturated or saturated, branched or linear, aliphatic or aromatic alcohols having a total amount of carbon atoms from C6 to C30, preferably from C8 to C22, more preferably from C8 to C20 and most preferably from C8 to C18 in the alcohol substituent.

The term "phosphoric acid di-ester" in the meaning of the present invention refers to an o-phosphoric acid molecule di-esterified with two alcohol molecules selected from the same or different, unsaturated or saturated, branched or linear, aliphatic or aromatic alcohols having a total amount of carbon atoms from C6 to C30, preferably from C8 to C22, more preferably from C8 to C20 and most preferably from C8 to C18 in the alcohol substituent.

It is appreciated that the expression "one or more" phosphoric acid mono-ester means that one or more kinds of phosphoric acid mono-ester may be present in the phosphoric acid ester blend.

Accordingly, it should be noted that the one or more phosphoric acid mono-ester may be one kind of phosphoric acid mono-ester. Alternatively, the one or more phosphoric acid mono-ester may be a mixture of two or more kinds of phosphoric acid mono-ester. For example, the one or more phosphoric acid mono-ester may be a mixture of two or three kinds of phosphoric acid mono-ester, like two kinds of phosphoric acid mono-ester.

In one embodiment of the present invention, the one or more phosphoric acid mono-ester consists of an o-phosphoric acid molecule esterified with one alcohol selected from unsaturated or saturated, branched or linear, aliphatic or aromatic alcohols having a total amount of carbon atoms from C6 to C30 in the alcohol substituent. For example, the one or more phosphoric acid mono-ester consists of an o-phosphoric acid molecule esterified with one alcohol selected from unsaturated or saturated, branched or linear, aliphatic or aromatic alcohols having a total amount of carbon atoms from C8 to C22, more preferably from C8 to C20 and most preferably from C8 to C18 in the alcohol substituent.

In one embodiment of the present invention, the one or more phosphoric acid mono-ester is selected from the group comprising hexyl phosphoric acid mono-ester, heptyl phosphoric acid mono-ester, octyl phosphoric acid mono-ester, 2-ethylhexyl phosphoric acid mono-ester, nonyl phosphoric acid mono-ester, decyl phosphoric acid mono-ester, undecyl phosphoric acid mono-ester, dodecyl phosphoric acid mono-ester, tetradecyl phosphoric acid mono-ester, hexadecyl phosphoric acid mono-ester, heptylnonyl phosphoric acid mono-ester, octadecyl phosphoric acid mono-ester, 2-octyl-1-decylphosphoric acid mono-ester, 2-octal-1-dodecylphosphoric acid mono-ester and mixtures thereof.

For example, the one or more phosphoric acid mono-ester is selected from the group comprising 2-ethylhexyl phosphoric acid mono-ester, hexadecyl phosphoric acid mono-ester, heptylnonyl phosphoric acid mono-ester, octadecyl phosphoric acid mono-ester, 2-octyl-1-decylphosphoric acid mono-ester, 2-octyl-1-dodecylphosphoric acid mono-ester and mixtures thereof. In one embodiment of the present invention, the one or more phosphoric acid mono-ester is 2-octyl-1-dodecylphosphoric acid mono-ester.

It is appreciated that the expression "one or more" phosphoric acid di-ester means that one or more kinds of phosphoric acid di-ester may be present in the coating layer of the calcium carbonate and/or the phosphoric acid ester blend.

Accordingly, it should be noted that the one or more phosphoric acid di-ester may be one kind of phosphoric acid di-ester. Alternatively, the one or more phosphoric acid di-ester may be a mixture of two or more kinds of phosphoric acid di-ester. For example, the one or more phosphoric acid di-ester may be a mixture of two or three kinds of phosphoric acid di-ester, like two kinds of phosphoric acid di-ester.

In one embodiment of the present invention, the one or more phosphoric acid di-ester consists of an o-phosphoric acid molecule esterified with two alcohols selected from unsaturated or saturated, branched or linear, aliphatic or aromatic alcohols having a total amount of carbon atoms from C6 to C30 in the alcohol substituent. For example, the one or more phosphoric acid di-ester consists of an o-phosphoric acid molecule esterified with two fatty alcohols selected from unsaturated or saturated, branched or linear, aliphatic or aromatic alcohols having a total amount of carbon atoms from C8 to C22, more preferably from C8 to C20 and most preferably from C8 to C18 in the alcohol substituent.

It is appreciated that the two alcohols used for esterifying the phosphoric acid may be independently selected from the same or different, unsaturated or saturated, branched or linear, aliphatic or aromatic alcohols having a total amount of carbon atoms from C6 to C30 in the alcohol substituent. In other words, the one or more phosphoric acid di-ester may comprise two substituents being derived from the same alcohols or the phosphoric acid di-ester molecule may comprise two substituents being derived from different alcohols.

In one embodiment of the present invention, the one or more phosphoric acid di-ester consists of an o-phosphoric acid molecule esterified with two alcohols selected from the same or different, saturated and linear and aliphatic alcohols having a total amount of carbon atoms from C6 to C30, preferably from C8 to C22, more preferably from C8 to C20 and most preferably from C8 to C18 in the alcohol substituent. Alternatively, the one or more phosphoric acid di-ester consists of an o-phosphoric acid molecule esterified with two alcohols selected from the same or different, saturated and branched and aliphatic alcohols having a total amount of carbon atoms from C6 to C30, preferably from C8 to C22, more preferably from C8 to C20 and most preferably from C8 to C18 in the alcohol substituent.

In one embodiment of the present invention, the one or more phosphoric acid di-ester is selected from the group comprising hexyl phosphoric acid di-ester, heptyl phosphoric acid di-ester, octyl phosphoric acid di-ester, 2-ethylhexyl phosphoric acid di-ester, nonyl phosphoric acid di-ester, decyl phosphoric acid di-ester, undecyl phosphoric acid di-ester, dodecyl phosphoric acid di-ester, tetradecyl phosphoric acid di-ester, hexadecyl phosphoric acid di-ester, heptylnonyl phosphoric acid di-ester, octadecyl phosphoric acid di-ester, 2-octyl-1-decylphosphoric acid di-ester, 2-octyl-1-dodecylphosphoric acid di-ester and mixtures thereof.

For example, the one or more phosphoric acid di-ester is selected from the group comprising 2-ethylhexyl phosphoric acid di-ester, hexadecyl phosphoric acid di-ester, heptylnonyl phosphoric acid di-ester, octadecyl phosphoric acid di-ester, 2-octyl-1-decylphosphoric acid di-ester, 2-octyl-1-dodecylphosphoric acid di-ester and mixtures thereof. In one embodiment of the present invention, the one or more phosphoric acid di-ester is 2-octyl-1-dodecylphosphoric acid di-ester.

In one embodiment of the present invention, the one or more phosphoric acid mono-ester is selected from the group comprising 2-ethylhexyl phosphoric acid mono-ester, hexadecyl phosphoric acid mono-ester, heptylnonyl phosphoric acid mono-ester, octadecyl phosphoric acid mono-ester, 2-octyl-1-decylphosphoric acid mono-ester, 2-octyl-1-dodecylphosphoric acid mono-ester and mixtures thereof and the one or more phosphoric acid di-ester is selected from the group comprising 2-ethylhexyl phosphoric acid di-ester, hexadecyl phosphoric acid di-ester, heptylnonyl phosphoric acid di-ester, octadecyl phosphoric acid di-ester, 2-octyl-1-decylphosphoric acid di-ester, 2-octyl-1-dodecylphosphoric acid di-ester and mixtures thereof.

For example, at least a part of the accessible surface area of the calcium carbonate comprises a phosphoric acid ester blend of one phosphoric acid mono-ester and/or reaction products thereof and one phosphoric acid di-ester and/or reaction products thereof. In this case, the one phosphoric acid mono-ester is selected from the group comprising 2-ethylhexyl phosphoric acid mono-ester, hexadecyl phosphoric acid mono-ester, heptylnonyl phosphoric acid mono-ester, octadecyl phosphoric acid mono-ester, 2-octyl-1-decylphosphoric acid mono-ester and 2-octyl-1-dodecylphosphoric acid mono-ester, the one phosphoric acid di-ester is selected from the group comprising 2-ethylhexyl phosphoric acid di-ester, hexadecyl phosphoric acid di-ester, heptylnonyl phosphoric acid di-ester, octadecyl phosphoric acid di-ester, 2-octyl-1-decylphosphoric acid di-ester and 2-octyl-1-dodecylphosphoric acid di-ester.

The phosphoric acid ester blend comprises the one or more phosphoric acid mono-ester and/or reaction products thereof to the one or more phosphoric acid di-ester and/or reaction products thereof in a specific molar ratio. In particular, the molar ratio of the one or more phosphoric acid mono-ester and/or reaction products thereof to the one or more phosphoric acid di-ester and/or reaction products thereof in the treatment layer and/or the phosphoric acid ester blend is from 1:1 to 1:100, preferably from 1 : 1.1 to 1 : 60, more preferably from 1 : 1.1 to 1 : 40, even more preferably from 1 : 1.1 to 1 : 20 and most preferably from 1 : 1.1 to 1 : 10.

The wording "molar ratio of the one or more phosphoric acid mono-ester and reaction products thereof to the one or more phosphoric acid di-ester and reaction products thereof" in the meaning of the present invention refers to the sum of the molecular weight of the phosphoric acid mono-ester molecules and/or the sum of the molecular weight of the phosphoric acid mono-ester molecules in the reaction products thereof to the sum of the molecular weight of the phosphoric acid di-ester molecules and/or the sum of the molecular weight of the phosphoric acid di-ester molecules in the reaction products thereof.

In one embodiment of the present invention, the phosphoric acid ester blend coated on at least a part of the surface of the calcium carbonate may further comprise one or more phosphoric acid tri-ester and/or phosphoric acid and/or reaction products thereof.

The term "phosphoric acid tri-ester" in the meaning of the present invention refers to an o-phosphoric acid molecule tri-esterified with three alcohol molecules selected from the same or different, unsaturated or saturated, branched or linear, aliphatic or aromatic alcohols having a total amount of carbon atoms from C6 to C30, preferably from C8 to C22, more preferably from C8 to C20 and most preferably from C8 to C18 in the alcohol substituent.

It is appreciated that the expression "one or more" phosphoric acid tri-ester means that one or more kinds of phosphoric acid tri-ester may be present on at least a part of the accessible surface area of the calcium carbonate.

Accordingly, it should be noted that the one or more phosphoric acid tri-ester may be one kind of phosphoric acid tri-ester. Alternatively, the one or more phosphoric acid tri-ester may be a mixture of two or more kinds of phosphoric acid tri-ester. For example, the one or more phosphoric acid tri-ester may be a mixture of two or three kinds of phosphoric acid tri-ester, like two kinds of phosphoric acid tri-ester.

According to a preferred embodiment of the present invention, in method step a) a substrate is provided, wherein the substrate comprises on at least one side a coating layer comprising calcium carbonate, preferably ground calcium carbonate, precipitated calcium carbonate and/or surface-treated calcium carbonate.

According to one embodiment, the salifiable alkaline or alkaline earth compound is in form of particles having a weight median particle size *d*₅₀ from 15 nm to 200 µm, preferably from 20 nm to 100 µm, more preferably from 50 nm to 50 µm, and most preferably from 100 nm to 2 µm.

According to one embodiment, the salifiable alkaline or alkaline earth compound has a specific surface area from 4 to 120 m²/g, preferably from 8 to 50 m²/g.

The amount of the salifiable alkaline or alkaline earth compound in the coating layer can range from 40 to 99 wt.-%, based on the total weight of the coating layer, preferably from 45 to 98 wt.-%, and more preferably from 60 to 97 wt.-%.

According to one embodiment, the coating layer further comprises a binder, preferably in an amount from 1 to 50 wt.-%, based on the total weight of the salifiable alkaline or alkaline earth compound, preferably from 3 to 30 wt.-%, and more preferably from 5 to 15 wt.-%.

Any suitable polymeric binder may be used in the liquid coating composition of the invention. For example, the polymeric binder may be a hydrophilic polymer such as, for example, polyvinyl alcohol, polyvinyl pyrrolidone, gelatin, cellulose ethers, polyoxazolines, polyvinylacetamides, partially hydrolyzed polyvinyl acetate/vinyl alcohol, polyacrylic acid, polyacrylamide, polyalkylene oxide, sulfonated or phosphated polyesters and polystyrenes, casein, zein, albumin, chitin, chitosan, dextran, pectin, collagen derivatives, collodian, agar-agar, arrowroot, guar, carrageenan, starch, tragacanth, xanthan, or rhamsan and mixtures thereof. It is also possible to use other binders such as hydrophobic materials, for example, poly(styrene-co-butadiene), polyurethane latex, polyester latex, poly(n-butyl acrylate), poly(n-butyl methacrylate), poly(2-ethylhexyl acrylate), copolymers of n-butylacrylate and ethylacrylate, copolymers of vinylacetate and n-butylacrylate, and the like and mixtures thereof. Further examples of suitable binders are homopolymers or copolymers of acrylic and/or methacrylic acids, itaconic acid, and acid esters, such as e.g. ethylacrylate, butyl acrylate, styrene, unsubstituted or substituted vinyl chloride, vinyl acetate, ethylene, butadiene, acrylamides and acrylonitriles, silicone resins, water dilutable alkyd resins, acrylic/alkyd resin combinations, natural oils such as linseed oil, and mixtures thereof.

According to one embodiment, the binder is selected from starch, polyvinylalcohol, styrene-butadiene latex, styrene-acrylate, polyvinyl acetate latex, polyolefines, ethylene acrylate, microfibrillated cellulose, microcrystalline cellulose, nanocellulose, cellulose, carboxymethylcellulose, bio-based latex, or mixtures thereof.

According to another embodiment, the coating layer does not comprise a binder.

Other optional additives that may be present in the coating layer are, for example, dispersants, milling aids, surfactants, rheology modifiers, lubricants, defoamers, optical brighteners, dyes, preservatives, or pH controlling agents. According to one embodiment, the coating layer further comprises a rheology modifier. Preferably the rheology modifier is present in an amount of less than 1 wt.-%, based on the total weight of the filler.

According to an exemplary embodiment, the salifiable alkaline or alkaline earth compound is dispersed with a dispersant. The dispersant may be used in an amount from 0.01 to 10 wt.-%, 0.05 to 8 wt.-%, 0.5 to 5 wt.-%, 0.8 to 3 wt.-%, or 1.0 to 1.5 wt.-%, based on the total weight of the salifiable alkaline or alkaline earth compound. In a preferred embodiment, the salifiable alkaline or alkaline earth compound is dispersed with an amount of 0.05 to 5 wt.-%, and preferably with an amount of 0.5 to 5 wt.-% of a dispersant, based on the total weight of the salifiable alkaline or alkaline earth compound. A suitable dispersant is preferably selected from the group comprising homopolymers or copolymers of polycarboxylic acid salts based on, for example, acrylic acid, methacrylic acid, maleic acid, fumaric acid or itaconic acid and acrylamide or mixtures thereof. Homopolymers or copolymers of acrylic acid are especially preferred. The molecular weight *M_{w}* of such products is preferably in the range of 2000 to 15000 g/mol, with a molecular weight *M_{w}* of 3000 to 7000 g/mol being especially preferred. The molecular weight *M_{w}* of such products is also preferably in the range of 2000 to 150000 g/mol, and an M_{w} of 15000 to 50 000 g/mol is especially preferred, e.g., 35000 to 45000 g/mol. According to an exemplary embodiment, the dispersant is polyacrylate.

The coating layer may also comprise active agents, for example, bioactive molecules as additives, for example, enzymes, chromatic indicators susceptible to change in pH or temperature, fluorescent materials.

According to one embodiment, the coating layer has a coat weight from 0.5 to 100 g/m², preferably from 1 to 75 g/m², more preferably from 2 to 50 g/m², and most preferably from 4 to 25 g/m².

The coating layer may have a thickness of at least 1 µm, e.g. at least 5 µm, 10 µm, 15 µm or 20 µm. Preferably the coating layer has a thickness in the range of 1 µm up to 150 µm.

According to one embodiment, the substrate comprises a first side and a reverse side, and the substrate comprises a coating layer comprising a salifiable alkaline or alkaline earth compound on the first side and the reverse side. According to a preferred embodiment, the substrate comprises a first side and a reverse side, and the substrate comprises a coating layer comprising an alkaline or alkaline earth carbonate, preferably calcium carbonate, on the first side and the reverse side.

According to one embodiment, the coating layer is in direct contact with the surface of the substrate.

According to a further embodiment, the substrate comprises one or more additional precoating layers between the substrate and the coating layer comprising a salifiable alkaline or alkaline earth compound. Such additional precoating layers may comprise kaolin, silica, talc, plastic, precipitated calcium carbonate, modified calcium carbonate, ground calcium carbonate, or mixtures thereof. In this case, the coating layer may be in direct contact with the precoating layer, or, if more than one precoating layer is present, the coating layer may be in direct contact with the top precoating layer.

According to another embodiment of the present invention, the substrate comprises one or more barrier layers between the substrate and the coating layer comprising a salifiable alkaline or alkaline earth compound. In this case, the coating layer may be in direct contact with the barrier layer, or, if more than one barrier layer is present, the coating layer may be in direct contact with the top barrier layer. The barrier layer may comprise a polymer, for example, polyvinyl alcohol, polyvinyl pyrrolidone, gelatin, cellulose ethers, polyoxazolines, polyvinylacetamides, partially hydrolyzed polyvinyl acetate/vinyl alcohol, polyacrylic acid, polyacrylamide, polyalkylene oxide, sulfonated or phosphated polyesters and polystyrenes, casein, zein, albumin, chitin, chitosan, dextran, pectin, collagen derivatives, collodian, agar-agar, arrowroot, guar, carrageenan, starch, tragacanth, xanthan, rhamsan, poly(styrene-co-butadiene), polyurethane latex, polyester latex, poly(n-butyl acrylate), poly(n-butyl methacrylate), poly(2-ethylhexyl acrylate), copolymers of n-butylacrylate and ethylacrylate, copolymers of vinylacetate and n-butylacrylate, and the like and mixtures thereof. Further examples of suitable barrier layers are homopolymers or copolymers of acrylic and/or methacrylic acids, itaconic acid, and acid esters, such as e.g. ethylacrylate, butyl acrylate, styrene, unsubstituted or substituted vinyl chloride, vinyl acetate, ethylene, butadiene, acrylamides and acrylonitriles, silicone resins, water dilutable alkyd resins, acrylic/alkyd resin combinations, natural oils such as linseed oil, and mixtures thereof. According to one embodiment, the barrier layer comprises latexes, polyolefins, polyvinylalcohols, kaolin, talcum, mica for creating tortuous structures (stacked structures), and mixtures thereof.

According to still another embodiment of the present invention, the substrate comprises one or more precoating and barrier layers between the substrate and the coating layer comprising a salifiable alkaline or alkaline earth compound. In this case, the coating layer may be in direct contact with the top precoating layer or barrier layer, respectively.

According to one embodiment of the present invention, the substrate of step a) is prepared by
i) providing a substrate,
ii) applying a coating composition comprising a salifiable alkaline or alkaline earth compound on at least one side of the substrate to form a coating layer, and
iii) optionally, drying the coating layer.

The coating composition can be in liquid or dry form. According to one embodiment, the coating composition is a dry coating composition. According to another embodiment, the coating composition is a liquid coating composition. In this case, the coating layer may be dried.

According to one embodiment of the present invention, the coating composition is an aqueous composition, i.e. a composition containing water as the only solvent. According to another embodiment, the coating composition is a non-aqueous composition. Suitable solvents are known to the skilled person and are, for example, aliphatic alcohols, ethers and diethers having from 4 to 14 carbon atoms, glycols, alkoxylated glycols, glycol ethers, alkoxylated aromatic alcohols, aromatic alcohols, mixtures thereof, or mixtures thereof with water.

According to one embodiment of the present invention, the solids content of the coating composition is in the range from 5 wt.-% to 75 wt.-%, preferably from 20 to 67 wt.-%, more preferably from 30 to 65 wt.-%, and most preferably from 50 to 62 wt.-%, based on the total weight of the composition. According to a preferred embodiment, the coating composition is an aqueous composition having a solids content in the range from 5 wt.-% to 75 wt.-%, preferably from 20 to 67 wt.-%, more preferably from 30 to 65 wt.-%, and most preferably from 50 to 62 wt.-%, based on the total weight of the composition.

According to one embodiment of the present invention, the coating composition has a Brookfield viscosity of between 10 and 4000 mPa·s at 20°C, preferably between 100 and 3500 mPa·s at 20°C, more preferably between 200 and 3000 mPa·s at 20°C, and most preferably between 250 and 2000 mPa·s at 20°C.

According to one embodiment, method steps ii) and iii) are also carried out on the reverse side of the substrate to manufacture a substrate being coated on the first and the reverse side. These steps may be carried out for each side separately or may be carried out on the first and the reverse side simultaneously.

According to one embodiment of the present invention, method steps ii) and iii) are carried out two or more times using a different or the same coating composition.

According to one embodiment of the present invention, one or more additional coating compositions are applied onto at least one side of the substrate before method step ii). The additional coating compositions may be precoating compositions and/or a barrier layer compositions.

The coating compositions may be applied onto the substrate by conventional coating means commonly used in this art. Suitable coating methods are, e.g., air knife coating, electrostatic coating, metering size press, film coating, spray coating, wound wire rod coating, slot coating, slide hopper coating, gravure, curtain coating, high speed coating and the like. Some of these methods allow for simultaneous coatings of two or more layers, which is preferred from a manufacturing economic perspective. However, any other coating method which would be suitable to form a coating layer on the substrate may also be used. According to an exemplary embodiment, the coating composition is applied by high speed coating, metering size press, curtain coating, spray coating, flexo and gravure, or blade coating, preferably curtain coating.

According to step iii), the coating layer formed on the substrate is dried. The drying can be carried out by any method known in the art, and the skilled person will adapt the drying conditions such as the temperature according to his process equipment. For example, the coating layer can be dried by infrared drying and/or convection drying. The drying step may be carried out at room temperature, i.e. at a temperature of 20°C ± 2°C or at other temperatures. According to one embodiment, method step iii) is carried out at substrate surface temperature from 25 to 150°C, preferably from 50 to 140°C, and more preferably from 75 to 130°C. Optionally applied precoating layers and/or barrier layers can be dried in the same way.

After coating, the coated substrate may be subject to calendering or super-calendering to enhance surface smoothness. For example, calendering may be carried out at a temperature from 20 to 200°C, preferably from 60 to 100°C using, for example, a calender having 2 to 12 nips. Said nips may be hard or soft, hard nips, for example, can be made of a ceramic material. According to one exemplary embodiment, the coated substrate is calendered at 300 kN/m to obtain a glossy coating. According to another exemplary embodiment, the coated substrate is calendered at 120 kN/m to obtain a matt coating.

### Method step b)

According to step b) of the method of the present invention, a liquid treatment composition comprising an acid is applied onto at least one region of the coating layer to form at least one surface-modified region on and/or within the coating layer.

The liquid treatment composition may comprise any inorganic or organic acid that forms CO₂ when it reacts with a salifiable alkaline or alkaline earth compound. According to one embodiment, the acid is an organic acid, preferably a monocarboxylic, dicarboxylic or tricarboxylic acid.

According to one embodiment, the at least one acid is a strong acid having a pKₐ of 0 or less at 20°C. According to another embodiment, the at least one acid is a medium-strong acid having a pKₐ value from 0 to 2.5 at 20°C. If the pKₐ at 20°C is 0 or less, the acid is preferably selected from sulphuric acid, hydrochloric acid, or mixtures thereof. If the pKₐ at 20°C is from 0 to 2.5, the acid is preferably selected from H₂SO₃, H₃PO₄, oxalic acid, or mixtures thereof. However, acids having a pKₐ of more than 2.5 may also be used, for example, suberic acid, succinic acid, acetic acid, citric acid, formic acid, sulphamic acid, tartaric acid, benzoic acid, or phytic acid.

According to one embodiment of the present invention, the acid is selected from the group consisting of hydrochloric acid, sulphuric acid, sulphurous acid, phosphoric acid, citric acid, oxalic acid, acetic acid, formic acid, sulphamic acid, tartaric acid, phytic acid, boric acid, succinic acid, suberic acid, benzoic acid, or mixtures thereof. According to a preferred embodiment, the acid is selected from the group consisting of hydrochloric acid, sulphuric acid, sulphurous acid, phosphoric acid, oxalic acid, boric acid, suberic acid, succinic acid, sulphamic acid, tartaric acid, or mixtures thereof, more preferably the acid is selected from the group consisting of sulphuric acid, phosphoric acid, boric acid, suberic acid, sulphamic acid, tartaric acid, or mixtures thereof, and most preferably the acid is phosphoric acid.

The acid may consist of only one type of acid. Alternatively, the acid can consists of two or more types of acids.

The acid may be applied in concentrated form or in diluted form. According to one embodiment of the present invention, the liquid treatment composition comprises an acid and water. According to another embodiment of the present invention, the liquid treatment composition comprises an acid and a solvent. According to another embodiment of the present invention, the liquid treatment composition comprises an acid, water, and a solvent. Suitable solvents are known in the art and are, for example, aliphatic alcohols, ethers and diethers having from 4 to 14 carbon atoms, glycols, alkoxylated glycols, glycol ethers, alkoxylated aromatic alcohols, aromatic alcohols, mixtures thereof, or mixtures thereof with water. According to one exemplary embodiment, the liquid coating composition comprises phosphoric acid, water, and ethanol, preferably in a weight ratio of 1:1:1.

According to one embodiment, the liquid treatment composition comprises the acid in an amount from 0.1 to 100 wt.-%, based on the total weight of the liquid composition, preferably in an amount from 1 to 80 wt.-%, more preferably in an amount from 2 to 50 wt.-%, and most preferably in an amount from 5 to 30 wt.-%.

In addition to the acid, the liquid treatment composition may further comprise a printing ink, a pigmented ink, a colorant, a dye, metal ions, transition metal ions, a surfactant, a dispersant, a biocide, a corrosion inhibitor, a pharmaceutical agent, a hydrophobising agent, a wax, a salt, a polymer, a hot melt, and/or a polymerising composition. According to one embodiment of the present invention, the liquid treatment composition comprises an acid and a hydrophobising agent. The hydrophobising agent may be selected from the hydrophobising agents mentioned above, in the context of surface-treated calcium carbonate.

The liquid treatment composition can be applied onto at least one region of the coating layer by any suitable method known in the art.

According to one embodiment, the liquid treatment composition is applied by spray coating, inkjet printing, offset printing, flexographic printing, screen printing, plotting, contact stamping, rotogravure printing, spin coating, reverse gravure coating, slot coating, curtain coating, slide bed coating, film press, metered film press, blade coating, brush coating and/or a pencil. Preferably, the liquid treatment composition is applied by inkjet printing, for example, continuous inkjet printing or drop-on-demand inkjet printing.

The inkjet printing technology may provide the possibility to place very small droplets on the coating layer, which allows to create high resolution patterns on and/or within the coating layer. According to one embodiment, the liquid treatment composition is applied to the coating layer in form of droplets. Depending on the inkjet printer, the droplets may have a volume in the range from 10 µl to 0.5 pl. According to one embodiment, the droplets have a volume of less than or equal to 10 µl, preferably less than or equal to 100 nl, more preferably less than or equal to 1 nl, even more preferably less than or equal to 10 pl, and most preferably less than or equal to 0.5 pl. For example, the droplets may have a volume from 10 µl to 1 µl, from 1 µl to 100 nl, from 100 nl to 10 nl, from 10 nl to 1 nl, from 1 nl to 100 pl, from 100 pl to 10 pl, from 10 pl to 1 pl, or of about 0.5 pl.

According to another embodiment, the liquid treatment composition is applied to the coating layer in form of droplets to form surface-modified pixels on and/or within the coating layer. The pixels may have a diameter of less than 5 mm, preferably less 1000 µm, more preferably less than 200 µm, and most preferably less than 100 µm, or even less than 10 µm.

The liquid treatment composition can be applied onto the coating layer by depositing the treatment composition onto the top of the coating layer. Alternatively or additionally, in case the substrate is permeable for liquids, the liquid treatment composition can be applied to the coating layer by depositing the treatment composition onto the reverse side of the substrate. Substrates which are permeable for liquids are, for example, porous substrates such as paper or textile, woven or nonwoven fabrics, or fleece.

The application of the liquid treatment composition onto the coating layer can be carried out at a surface temperature of the substrate, which is at room temperature, i.e. at a temperature of 20±2°C, or at an elevated temperature, for example, at about 70°C. Carrying out method step b) at an elevated temperature may enhance the drying of the liquid treatment composition, and, hence, may reduce production time. According to one embodiment, method step b) is carried out at a substrate surface temperature of more than 5°C, preferably more than 10°C, more preferably more than 15°C, and most preferably more than 20°C. According to one embodiment, method step b) is carried out at a substrate surface temperature which is in the range from 5 to 120°C, more preferably in the range from 10 to 100°C, more preferably in the range from 15 to 90°C, and most preferably in the range from 20 to 80°C.

According to one embodiment of the present invention, the liquid treatment composition is continuously applied to the entire coating layer. Thereby, a continuous surface-modified region or layer is formed above the coating layer.

According to another embodiment of the present invention, the liquid treatment composition is applied onto the coating layer in form of a preselected pattern, preferably in form of channels, barriers, arrays, one-dimensional bar codes, two-dimensional bar codes, three-dimensional bar codes, security marks, numbers, letters, images, or designs. The pattern may have a resolution of more than 10 dpi, preferably more than 50 dpi, more preferably more than 100 dpi, even more preferably more than 1000 dpi, and most preferably more than 10000 dpi.

Without being bound to any theory, it is believed that by the application of the liquid treatment composition to the coating layer, the salifiable alkaline or alkaline earth compound of the coating layer reacts with the acid included in the treatment composition. Thereby the salifiable alkaline or alkaline earth compound is at least partially converted into an acid salt, which may have different properties compared to the original material. In case the salifiable alkaline or alkaline earth compound is an alkaline or alkaline earth carbonate, for example, the compound would be converted by the acid treatment into a non-carbonate alkaline or alkaline earth salt. For example, by applying the liquid treatment composition onto at least one region of the coating layer at least one surface-modified region is formed, which may have an increased specific surface area, an increased porosity, an increased hydrophilicity, a decreased gloss, or an increased roughness. The formed surface-modified regions may also exhibit different adsorption or absorption properties or changed fluorescence properties, e.g. due to changes in the mineral structure or the surface-modified region or the presence of metal or transition metal ions in the liquid treatment compositions or both.

By applying the liquid treatment composition according to method step b), the salifiable alkaline or alkaline earth compound can be converted into a water-insoluble or water-soluble salt.

According to one embodiment, the surface-modified region comprises an acid salt of the salifiable alkaline or alkaline earth compound. According to another embodiment, the surface-modified region comprises a non-carbonate alkaline or alkaline earth salt, preferably an insoluble non-carbonate alkaline or alkaline earth salt. According to a preferred embodiment, the surface-modified region comprises a non-carbonate calcium salt, preferably an insoluble non-carbonate calcium salt. In the meaning of the present invention "water-insoluble" materials are defined as materials which, when mixed with deionised water and filtered on a filter having a 0.2 µm pore size at 20°C to recover the liquid filtrate, provide less than or equal to 0.1 g of recovered solid material following evaporation at 95 to 100°C of 100 g of said liquid filtrate. "Water-soluble" materials are defined as materials leading to the recovery of greater than 0.1 g of recovered solid material following evaporation at 95 to 100°C of 100 g of said liquid filtrate.

According to one embodiment, the surface-modified region has an increased hydrophilicity compared to the non surface-modified regions of the coating layer and/or has an increased porosity compared to the non surface-modified regions of the coating layer and/or has an increased specific surface area compared to the non surface-modified regions of the coating layer and/or has an increased roughness compared to the non surface-modified regions of the coating layer and/or has a decreased gloss compared to the non surface-modified regions of the coating layer. The hydrophilic or hydrophobic nature of the surface-modified regions and the unmodified regions of the coating layer can be quantified by applying a drop of water on the respective region and measuring the contact angle θ between the solid surface and the edge surface of the water drop. When θ < 90°, the solid surface is hydrophilic and water is said to wet the surface, wherein in case θ = 1, water completely wets the surface. When θ > 90°, the solid surface is hydrophobic and no wetting takes place unless an external force is applied.

According to one embodiment of the present invention, the at least one surface-modified region has a contact angle from 0° to 110°, preferably from 5° to 90°, and more preferably from 10° to 80°.

### Additional process steps

According to one embodiment of the invention, the method further comprises a step c) of applying a protective layer above the at least one surface-modified region.

The protective layer can be made from any material, which is suitable to protect the underlying surface-modified region against unwanted environmental impacts or mechanical wear. Examples for suitable materials are resins, varnishes, silicons, polymers, metal foils, or cellulose-based materials.

The protective layer may be applied above the at least one surface-modified region by any method known in the art and suitable for the material of the protective layer. Suitable methods are, for example, air knife coating, electrostatic coating, metering size press, film coating, spray coating, extrusion coating, wound wire rod coating, slot coating, slide hopper coating, gravure, curtain coating, high speed coating, lamination, printing, adhesive bonding, and the like.

According to one embodiment of the present invention, the protective layer is applied above the at least one surface-modified region and the unmodified coating layer.

According to one embodiment, the protective layer is a removable protective layer.

According to a further embodiment of the present invention, the substrate provided in step a) comprises on the first side and on the reverse side a coating layer comprising a salifiable alkaline or alkaline earth compound, and in step b) the liquid treatment composition comprising an acid is applied onto at least one region of the coating layer on the first and the reverse side to form at least one surface modified region on the coating layer on the first and the reverse side. Step b) may be carried out for each side separately or may be carried out on the first and the reverse side simultaneously.

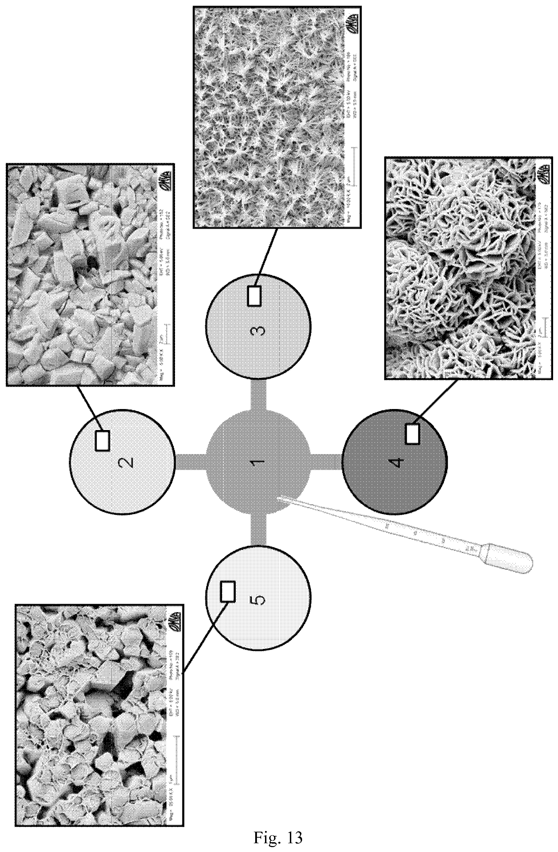

According to one embodiment of the present invention, method step b) is carried out two or more times using a different or the same liquid treatment composition. Thereby, different patterned surface-modified regions with different properties can be created. Fig. 13 shows an example of a separation and analysis platform with five different surface-modified regions, which were created by using five different liquid treatment compositions.

According to one embodiment of the present invention, the at least one surface-modified region obtained in step b) is washed or rinsed. The at least one surface-modified region can be washed or rinsed with water and/or a suitable solvent. Suitable solvents are known in the art and are, for example, aliphatic alcohols, ethers and diethers having from 4 to 14 carbon atoms, glycols, alkoxylated glycols, glycol ethers, alkoxylated aromatic alcohols, aromatic alcohols, mixtures thereof, or mixtures thereof with water.

According to one embodiment of the present invention, a method of manufacturing a surface-modified material is provided, comprising the following steps:
a) providing a substrate, wherein the substrate comprises on at least one side a coating layer comprising a salifiable alkaline or alkaline earth compound, and
b) applying a liquid treatment composition comprising an acid onto at least one region of the coating layer to form at least one surface-modified region on and/or
within the coating layer,
wherein the at least one surface-modified region comprises a water-soluble salt of the salifiable alkaline or alkaline earth compound, and
wherein the at least one surface-modified region obtained in step b) is washed or rinsed to dissolve and remove the water-soluble salt of the salifiable alkaline or alkaline earth compound from the coating layer.

By carrying out the afore-mentioned embodiment of the present invention, a surface-modified material can be obtained, which comprises an etched preselected pattern.

### The surface-modified material

According to one aspect of the present invention, a surface-modified material obtainable by a method according to the present invention is provided.

According to one embodiment, a surface-modified material comprising a substrate is provided, wherein the substrate comprises on at least one side a coating layer comprising a salifiable alkaline or alkaline earth compound, and wherein the coating layer comprises at least one surface-modified region, wherein the surface-modified region comprises an acid salt of the salifiable alkaline or alkaline earth compound. Preferably, the salifiable alkaline or alkaline earth compound is an alkaline or alkaline earth carbonate, preferably a calcium carbonate, and the surface-modified region comprises a non-carbonate alkaline or alkaline earth salt, preferably a non-carbonate calcium salt.

The surface-modified material according to the present invention is suitable for a wide range of applications. The skilled person will appropriately select the type of surface modification and the pattern of the surface modification for the desired application.

According to one embodiment, the surface-modified material according to the present invention can be a tool for bioassays, a microfluidic device, a lab-on-a-chip device, a paper-based analytical and/or diagnostical tool, a separation platform, a print medium, a packaging material, a wall paint, a bar code, or a data storage. A bioassay or biological assay is a biological testing procedure for estimating the concentration of a pharmaceutical active substance in a formulated product or bulk material.

According to a further aspect, a use of a surface-modified material according to the present invention in printing applications, in analytical applications, in diagnostic applications, in bioassays, in chemical applications, in electrical applications, in security devices, in overt or covert security elements, in brand protection, in microlettering, in micro imaging, in decorative, artistic, or visual applications, or in packaging applications is provided.

For example, by using the inventive method, it is possible to create matt or fluorescent patterns or individualized signs on a glossy printing paper. Such patterns or signs can be used as over or covert anti-counterfeiting or security marks, bar codes, or two-dimensional codes. For example, by the inventive method, bar codes, 2D codes, logos ect., may be created which are invisible for the human eye, but due to differences in gloss or fluorescence properties may be detectable for an electronic device, for example, a camera. For protection, such patterns can be covered with a transparent protective layer.

It is also possible to improve the quality of conventional printing applications on papers being coated with salifiable alkaline or alkaline earth compounds, by replacing the conventional printing ink by the liquid treatment composition of the present invention comprising a printing ink.

Furthermore, paper-based microfluidic devices can be produced on papers being coated with salifiable alkaline or alkaline earth compounds by directly printing the required hydrophilic channels and reservoirs onto the coated substrate. By adding a printing ink to the liquid treatment composition further features such as marks or scales or metal ions or transition metal ions can be added to the microfluidic devices in one step, which can improve the detection or reading of results provided by such devices. It is also possible to provide further functionalities together with the surface-treatment step to such paper-based microfluidic devices by adding further additives such as surfactants, dispersants, biocides, pharmaceutical agents, polymers, hot melts, or polymerising compositions, to the liquid treatment composition.

Fig. 13 shows an example of a separation and analysis platform with four different detection zones. A drop of the sample fluid to be analyzed is applied onto the starting region (1), from which the fluid can flow to the four different detection regions (2, 3, 4, 5). As shown by the scanning electron microscope (SEM) micrographs of the detection regions (2, 3, 4, 5), every detection region has a different surface structure, and therefore, can react differently with the applied sample fluid.

The scope and interest of the present invention will be better understood based on the following figures and examples which are intended to illustrate certain embodiments of the present invention and are non-limitative.

### Description of the figure:

Fig. 1 shows a scanning electron microscope (SEM) micrograph of a substrate comprising a coating layer (comparative sample).
Fig. 2 shows a scanning electron microscope (SEM) micrograph of a coated substrate that has been treated with a liquid treatment composition comprising phosphoric acid.
Fig. 3 shows a scanning electron microscope (SEM) micrograph of a coated substrate that has been treated with a liquid treatment composition comprising boric acid.
Fig. 4 shows a scanning electron microscope (SEM) micrograph of a coated substrate that has been treated with a liquid treatment composition comprising suberic acid.
Fig. 5 shows a scanning electron microscope (SEM) micrograph of a coated substrate that has been treated with a liquid treatment composition comprising succinic acid.
Fig. 6 shows a scanning electron microscope (SEM) micrograph of a coated substrate that has been treated with a liquid treatment composition comprising sulphuric acid.
Fig. 7 shows a scanning electron microscope (SEM) micrograph of a coated substrate that has been treated with a liquid treatment composition comprising tartaric acid.
Fig. 8 shows a scanning electron microscope (SEM) micrograph of modified and non modified regions of a coated substrate that has been treated with a liquid treatment composition comprising phosphoric acid.
Fig. 9 is a graph showing contact angle measurements of the coated substrate before and after application of the liquid treatment composition.
Fig. 10 shows photographic pictures of water droplets, which were applied to different surface-modified materials.
Fig. 11 shows a surface-modified material comprising a preselected pattern in form of hydrophilic interconnected channels.
Fig. 12 shows a cross-section through a channel of a surface-modified material according to the present invention.
Fig. 13 shows an example of a separation and analysis platform with five different surface-modified regions, which were created by using five different liquid treatment compositions.

### Examples

### 1. Measurement methods

In the following, measurement methods implemented in the examples are described.

### Brookfield viscosity

The Brookfield viscosity of the liquid coating compositions was measured after one hour of production and after one minute of stirring at 20°C ± 2°C at 100 rpm by the use of a Brookfield viscometer type RVT equipped with an appropriate disc spindle, for example spindle 2 to 5.

### Particle size distribution

The particle size distribution of the salifiable alkaline or alkaline earth compound particles was measured using a Sedigraph 5100 from the company Micromeritics, USA. The method and the instrument are known to the skilled person and are commonly used to determine grain size of fillers and pigments. The measurement was carried out in an aqueous solution comprising 0.1 wt.-% Na₄P₂O₇. The samples were dispersed using a high speed stirrer and supersonics. For the measurement of dispersed samples, no further dispersing agents were added.

### Solids content of an aqueous suspension

The suspension solids content (also known as "dry weight") was determined using a Moisture Analyser MJ33 from the company Mettler-Toledo, Switzerland, with the following settings: drying temperature of 160°C, automatic switch off if the mass does not change more than 1 mg over a period of 30 sec, standard drying of 5 to 20 g of suspension.

### Scanning electron microscope (SEM) micrographs

The prepared surface-modified samples were examined by a Sigma VP field emission scanning electron microscope (Carl Zeiss AG, Germany) and a variable pressure secondary electron detector (VPSE) with a chamber pressure of about 50 Pa.

### Contact angle measurements

For measuring the contact angle, four water drops of 4 µl each were applied on the sample material, and a photograph was taken 120 s after application. The determination of the contact angle was carried out visually with the aid of the measuring module of the Image Access database Version 8 based on the photos made of the droplets, and an average value was calculated.

| | |
|---|---|
| Camera: | Canon EOS 5D Mark II |
| Objective: | Canon EF 100 mm f/2 8L Macro IS USMDDDD |
| Difference adjustment: | 0.3 m |
| Distance rings: | Kenko distance rings 12+24+36 mm |
| Tripod and illumination | Kaiser microdrive tripod + 2x Repro illumination equipment RB5055 HF |
| Release: | Canon remote control / Timer TC-80N3 |
| Brightness balance: | automatically |
| Lens opening: | lens opening adjustment 32 |
| Illumination time: | automatically |
| Release delay: | 120 s after drop application |
| Drop size: | 4 µl. |

### X-ray diffraction (XRD) analysis

The samples were analysed with a Bruker D8 Advance powder diffractometer obeying Bragg's law. This diffractometer consisted of a 2.2 kW X-ray tube, a sample holder, a ϑ- ϑ goniometer, and a VÅNTEC-1 detector. Nickel-filtered Cu Kα radiation was employed in all experiments. The profiles were chart recorded automatically using a scan speed of 0.7° per minute in 2ϑ (XRD GV_7600). The resulting powder diffraction pattern was classified by mineral content using the DIFFRAC^{suite} software packages EVA and SEARCH, based on reference patterns of the ICDD PDF 2 database (XRD LTM_7603).

### 2. Materials

- CC1:: ground calcium carbonate (*d*₅₀: 0.7 µm, *d*₉₈: 4 µm), pre-dispersed slurry with solids content of 76.5%, commercially available from Omya AG, Switzerland.
- CC2:: superhydrophobic ground calcium carbonate, surface-treated with stearic acid (*d*₅₀: 1.7 µm, *d*₉₈: 6.5 µm), commercially available from Omya AG, Switzerland.
- Binder:: styrene-acrylate latex (Acronal S728), commercially available from BASF SE, Germany.
- Substrate:: polypropylene-based synthetic paper (Synteape), commercially available from Arjo Wiggins, Belgium.

### 3. Examples

### Example 1

### Preparation of surface-modified material,

Two different coating formulations A and B were prepared by mixing the calcium carbonates with water, and binder or ethanol, respectively, as indicated in Table 1 below. The coating formulations were prepared such that a solids content of 64.6 wt.-%, based on the total weight of the coating formulation and a Brookfield viscosity of about 400 mPa·s was achieved.

**Table 1: Composition of prepared coating formulations.**

| Coating formulation | Calcium carbonate | Amount binder [wt.-%, based on total weight of calcium carbonate] |
|---|---|---|
| A | CC1 | 10 |
| B | CC2 | -- (instead of using a binder, CC2 was dispersed in ethanol) |

Coated substrate samples were prepared by applying the prepared coating formulations onto the substrates using a rod coater with rod 3 (K303 Control Coater, Model 625, from Erichsen GmbH & Co KG, Hemer, Germany), wherein the coating was applied with a layer weight in the range from 10 to 22 g/m². The applied coating layer was dried with hot air.

Liquid treatment compositions were prepared by mixing acid, water and ethanol, as indicated in Table 2 below. The liquid treatment compositions were applied onto the coated substrate samples by spraying the treatment composition continuously onto the coating layer in a distance from the coated samples of about 15 cm, using an air brush attached to the in-house pressure line. The treatment was carried out at the substrate surface temperatures indicated in Table 3 below. The amount of applied liquid treatment composition was about 1 ml/m². The prepared surface-modified samples are compiled in Table 3 below.

**Table 2: Liquid treatment compositions.**

| Liquid treatment composition | Acid | Amount of acid | Amount of ethanol [ml] | Amount of water [ml] | pH |
|---|---|---|---|---|---|
| TC1 | phosphoric acid | 5 ml | 5 | 5 | 0.59 |
| TC2 | boric acid | 3.6 g | 25 | 5 | 5.19 |
| TC3 | suberic acid | 3.8 g | 25 | 5 | 3.71 |
| TC4 | succinic acid | 3.4 g | 25 | 5 | 2.96 |
| TC5 | sulphuric acid | 5 ml | 5 | 20 | 0.15 |
| TC6 | tartaric acid | 2.8 g | 5 | 5 | 1.39 |

**Table 3: Prepared surface-modified materials.**

| Sample | Coating formulation | Liquid treatment composition | Drying temperature [°C] |
|---|---|---|---|
| 1 (comparative) | A | -- | -- |
| 2 | A | TC1 | 25 |
| 3 | A | TC1 | 70 |
| 4 | A | TC2 | 25 |
| 5 | A | TC3 | 25 |
| 6 | A | TC4 | 25 |
| 7 | A | TC5 | 25 |
| 8 | A | TC6 | 25 |
| 9 (comparative) | B | -- | -- |
| 10 | B | TC1 | 25 |

### Results

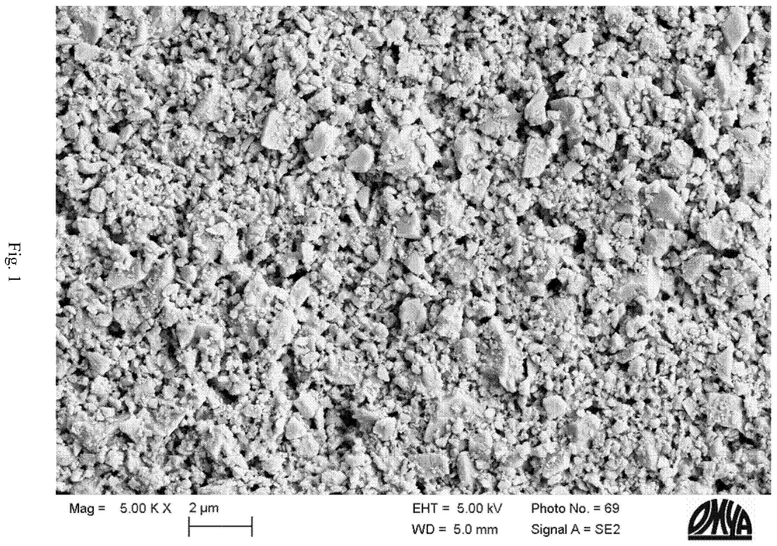

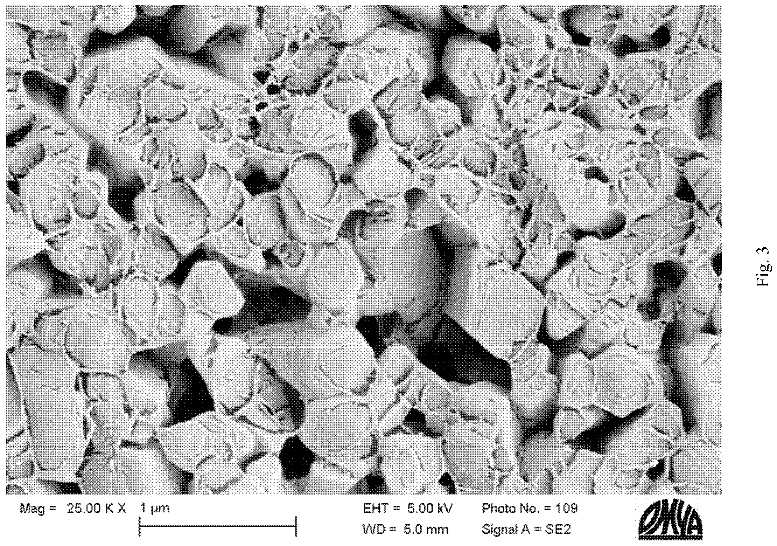

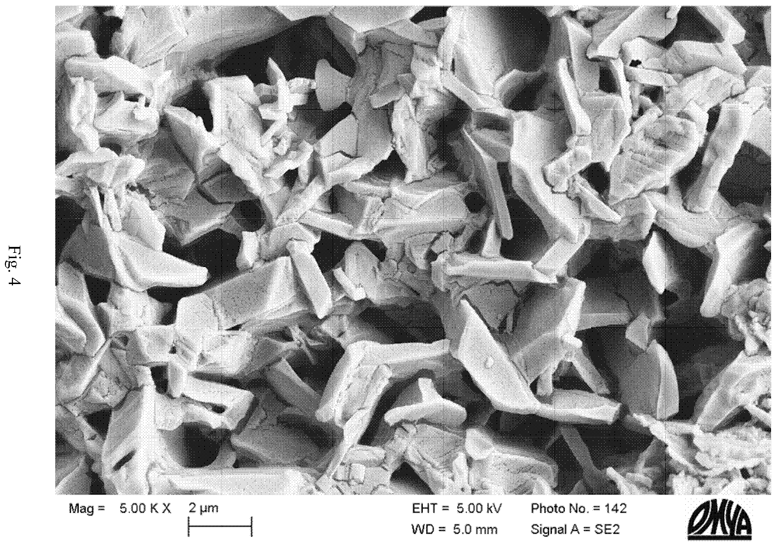

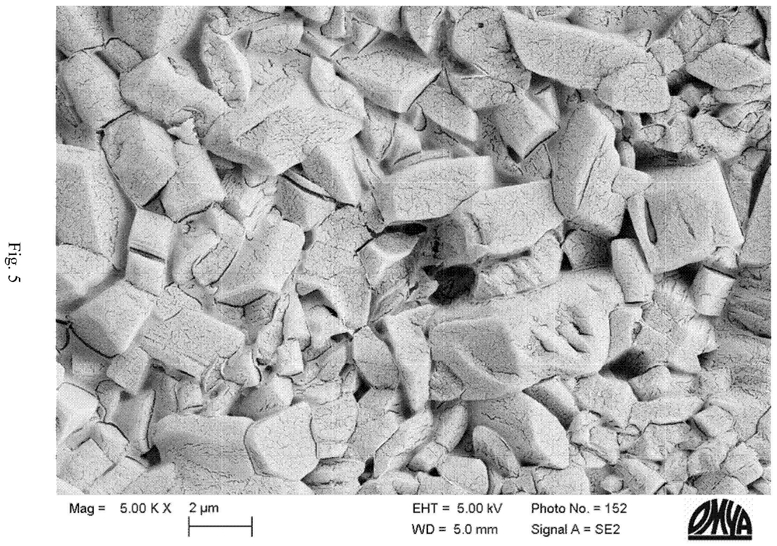

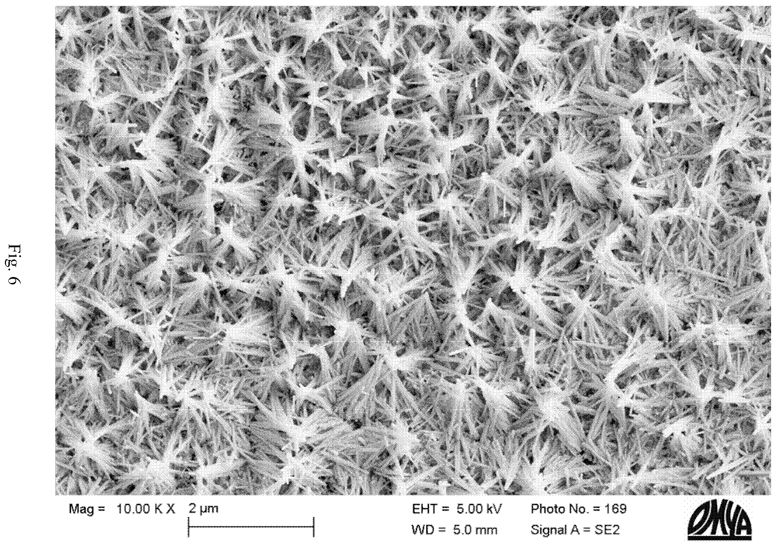

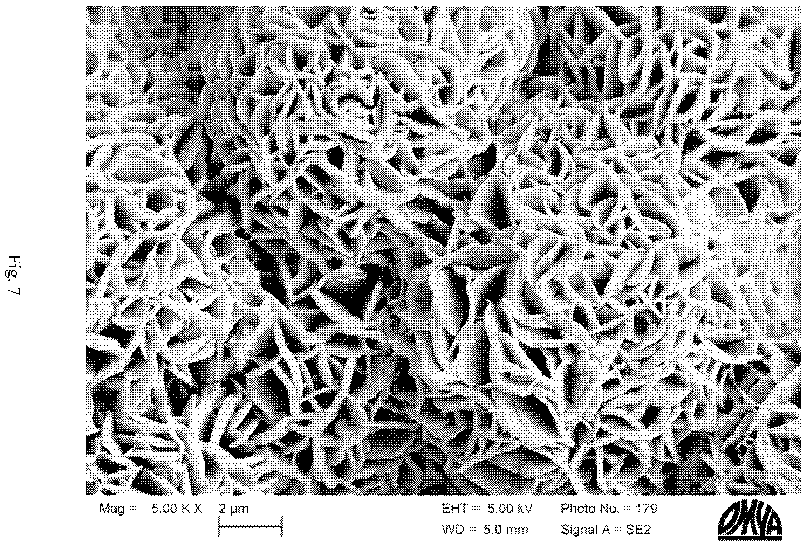

Figures 1 to 8 show scanning electron microscope (SEM) micrographs of the samples before and after the acidic treatment composition has been applied the coating layer. Said images confirm that the surface structure of the coating layers is modified by the inventive method:
Figure 1 shows a substrate sample coated with CC1 (sample 1) before the treatment with the liquid treatment composition. The surface has a grainy-like structure.

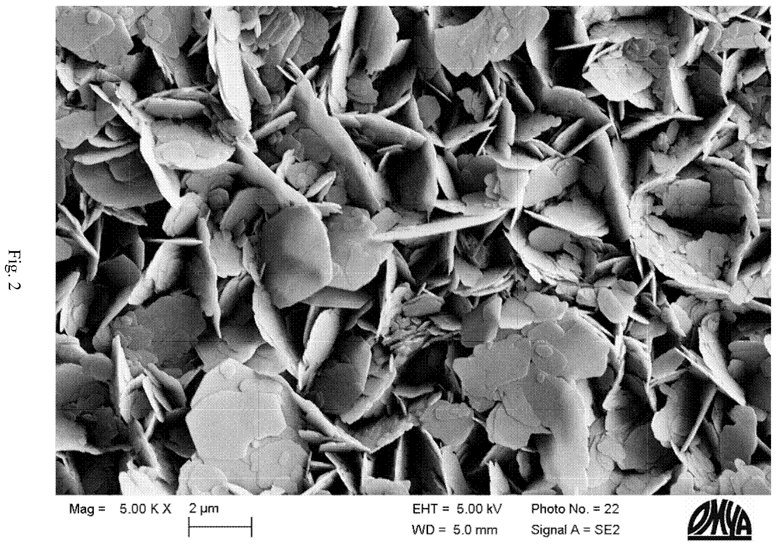

As can be gathered from Figs. 2 to 7, the treatment with liquid treatment compositions containing different acids leads to the formation of surface-modified regions differing in surface structures. For example, the treatment with phosphoric acid containing treatment composition leads to the formation of a rosy-like structure (sample 2), the treatment with suberic or succinic acid produces a square-like structure (samples 5 and 6), or the treatment with sulphuric acid creates a needle-like structure (sample 7).

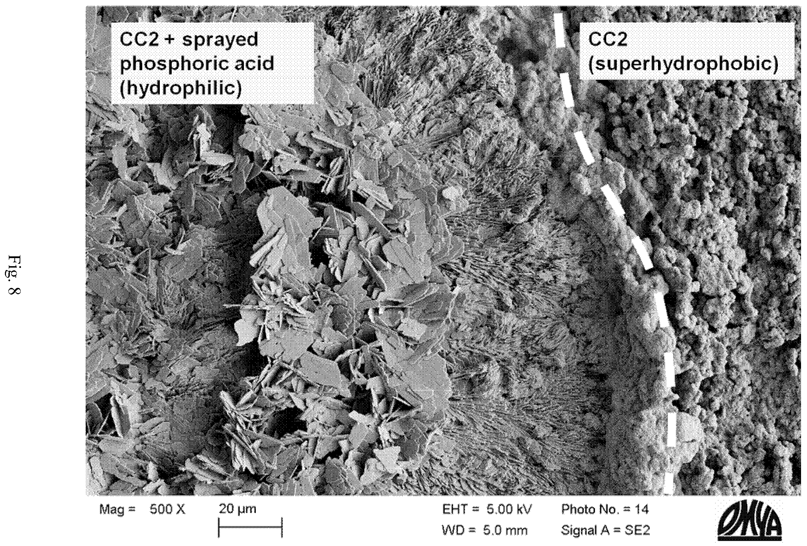

Figure 8 shows a scanning electron microscope (SEM) micrograph of sample 10. Said micrograph clearly reveals the difference in the surface structure of the hydrophilic surface-modified regions having a rosy-like structure and the superhydrophobic regions of the untreated coating layer having a grain-like structure.

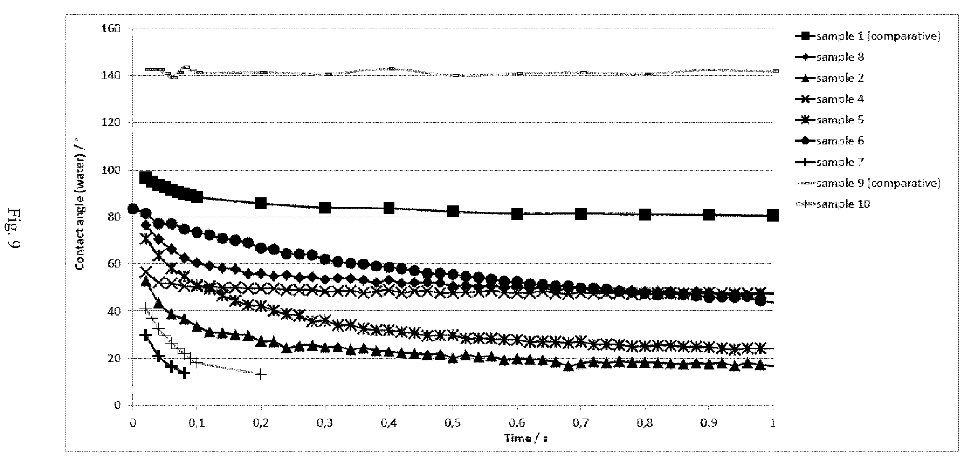

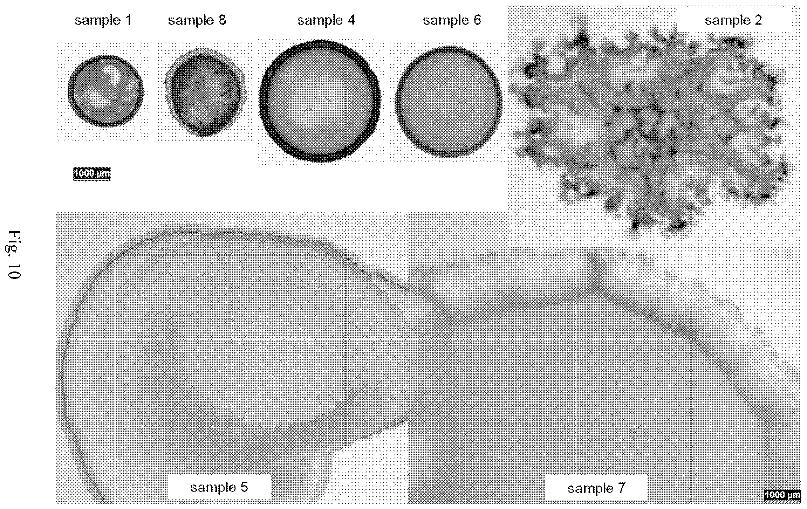

Figure 9 shows contact angle measurements, which were carried out for samples 1, 2, and 4 to 10. It can be gathered from said graph that the acid treatment rendered the surface of the surface-modified regions more hydrophilic compared to the non surface-modified regions. Photographic images of 2 µl droplet of water coloured with amaranth red, which have been applied to samples 1, 2, and 4 to 8 are shown in Fig. 10. While the droplet applied to comparative sample 1 shows the lowest spreading, the droplet applied to sample 7 shows the largest spreading indicating the most hydrophilic surface-modified material.

Comparison of the scanning electron microscope (SEM) micrographs of samples 2 and 3, which were treated at different substrate surface temperatures, revealed that the surface structure is not significantly affected by the elevated temperature. Carrying out the treatment step at elevated temperatures is beneficial because it enhances the drying of the liquid treatment composition.

X-ray diffraction (XRD) measurements were performed on samples 1, 2, 4, 5, 6, 7, and 8 using rotatable PMMA specimen holder rings. Comparison of the measured data sets with ICDD reference patterns revealed that all samples consisted of calcite, dolomite and polymers. Additionally detected phases, which were formed by the application of the liquid treatment composition, are summarized in Table 4 below.

**Table 4: Results of XRD measurements.**

| Mineral name | Formula | Sample number |
|---|---|---|
| Sassolite | B(OH)₃ | 4 |
| Parasibirskite | Ca₂B₂0₅•H₂O | 4 |
| Calcium Borate | Ca₂B₂O₅ | 4 |
| Calcium hydrogen phosphate hydrate | Ca(H₂PO₄)₂H₂O | 2 |
| Calcium hdrogen phosphate | Ca₄H₂(P₃O₁₀)₂ | 2 |
| Anhydrite | CaSO₄ | 7 |
| Bassanite | CaSO₄•0.5 H₂O | 7 |
| Koktaite | (NH₄)₂Ca(SO₄)₂•H₂O | 7 |
| β-Succinic acid | C₄H₆O₄ | 6 |
| Suberic acid | C₈H₁₄O₄ | 5 |
| Hydrogen tartrate hydrate | C₄H₆O₆•H₂O | 5 |
| L-tartaric acid aniline hydrate | C₁₀H₁₃NO₆•H₂O | 8 |

### Example 2

A substrate was coated with coating formulation B of Example 1 as described in Example 1. The liquid treatment composition of Example 1 was sprayed in form of a grid onto the coating layer in a distance from the coated samples of about 15 cm at a substrate surface temperature of 25°C using an air brush attached to the in-house pressure line. The amount of applied liquid treatment composition was about 1 ml/m².

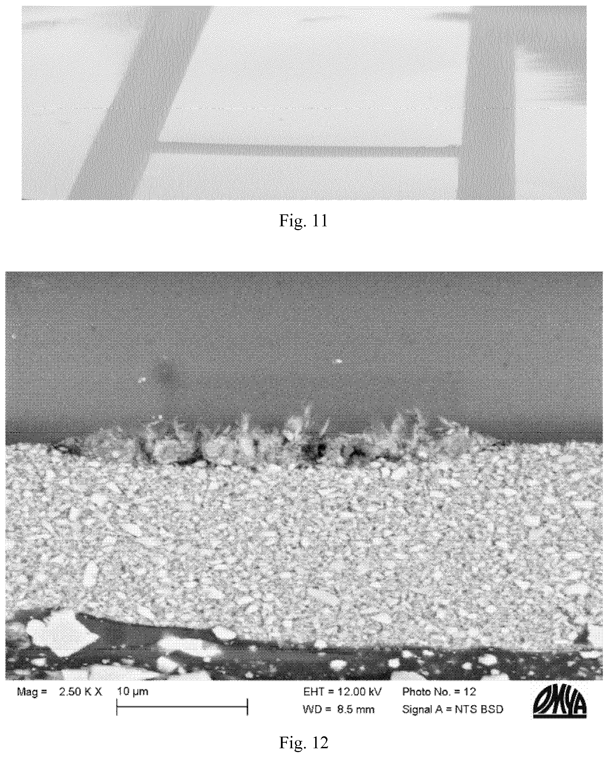

A scanning electron microscope (SEM) micrograph of the prepared surface-modified sample is shown in Fig. 11. The hydrophilic surface-modified regions (dark grey) are clearly distinguishable from the hydrophobic regions (lighter grey). This confirms that a patterned surface can be formed in a controlled manner by carrying out the inventive process. A cross-section through one of the hydrophilic channels is shown in Fig. 12. It can be gathered from said image that a defined channel is formed on the coating layer, while underneath the surface-modified region of the coating layer, the original coating layer is still present.

## Claims

1. A method of manufacturing a surface-modified material, comprising the following steps:
a) providing a substrate, wherein the substrate comprises on at least one side a coating layer comprising a salifiable alkaline or alkaline earth compound, and
b) applying a liquid treatment composition comprising an acid onto at least one region of the coating layer to form at least one surface-modified region on and/or within the coating layer.

2. The method of claim 1, wherein the substrate of step a) is prepared by
i) providing a substrate,
ii) applying a coating composition comprising a salifiable alkaline or alkaline earth compound on at least one side of the substrate to form a coating layer, and
iii) drying the coating layer.

3. The method of any one of the preceding claims, wherein the substrate is selected from the group comprising paper, cardboard, containerboard, plastic, cellophane, textile, wood, metal, glass, mica plate, nitrocellulose, or concrete, preferably paper, cardboard, containerboard, or plastic.

4. The method of any one of the preceding claims, wherein the salifiable alkaline or alkaline earth compound is an alkaline or alkaline earth oxide, an alkaline or alkaline earth hydroxide, an alkaline or alkaline earth alkoxide, an alkaline or alkaline earth methylcarbonate, an alkaline or alkaline earth hydroxycarbonate, an alkaline or alkaline earth bicarbonate, an alkaline or alkaline earth carbonate, or a mixtures thereof, preferably the salifiable alkaline or alkaline earth compound is an alkaline or alkaline earth carbonate being preferably selected from lithium carbonate, sodium carbonate, potassium carbonate, magnesium carbonate, calcium magnesium carbonate, calcium carbonate, or mixtures thereof, more preferably the salifiable alkaline or alkaline earth compound is calcium carbonate, and most preferably the salifiable alkaline or alkaline earth compound is a ground calcium carbonate, a precipitated calcium carbonate and/or a surface-treated calcium carbonate.

5. The method of any one of the preceding claims, wherein the salifiable alkaline or alkaline earth compound is in form of particles having a weight median particle size *d*₅₀ from 15 nm to 200 µm, preferably from 20 nm to 100 µm, more preferably from 50 nm to 50 µm, and most preferably from 100 nm to 2 µm.

6. The method of any one of the preceding claims, wherein the coating layer further comprises a binder, preferably in an amount from 1 to 50 wt.-%, based on the total weight of the salifiable alkaline or alkaline earth compound, preferably from 3 to 30 wt.-%, and more preferably from 5 to 15 wt.-%.

7. The method of any one of the preceding claims, wherein the acid is selected from the group consisting of hydrochloric acid, sulphuric acid, sulphurous acid, phosphoric acid, citric acid, oxalic acid, acetic acid, formic acid, sulphamic acid, tartaric acid, phytic acid, boric acid, succinic acid, suberic acid, benzoic acid, and mixtures thereof, preferably the acid is selected from the group consisting of hydrochloric acid, sulphuric acid, sulphurous acid, phosphoric acid, oxalic acid, boric acid, suberic acid, succinic acid, sulphamic acid, tartaric acid, or mixtures thereof, more preferably the acid is selected from the group consisting of sulphuric acid, phosphoric acid, boric acid, suberic acid, sulphamic acid, tartaric acid, or mixtures thereof, and most preferably the acid is phosphoric acid.

8. The method of any one of the preceding claims, wherein the liquid treatment composition further comprises a printing ink, a pigmented ink, a colorant, a dye, metal ions, transition metal ions, a surfactant, a dispersant, a biocide, a corrosion inhibitor, a pharmaceutical agent, a hydrophobising agent, a wax, a salt, a polymer, a hot melt, and/or a polymerising composition.

9. The method of any one of the preceding claims, wherein the liquid treatment composition comprises the acid in an amount from 0.1 to 100 wt.-%, based on the total weight of the liquid composition, preferably in an amount from 1 to 80 wt.-%, more preferably in an amount from 2 to 50 wt.-%, and most preferably in an amount from 5 to 30 wt.-%.

10. The method of any one of the preceding claims, wherein the liquid treatment composition is applied by spray coating, inkjet printing, offset printing, flexographic printing, screen printing, plotting, contact stamping, rotogravure printing, spin coating, reverse gravure coating, slot coating, curtain coating, slide bed coating, film press, metered film press, blade coating, brush coating and/or a pencil, preferably by inkjet printing or spray coating.

11. The method of any one of the preceding claims, wherein the liquid treatment composition is continuously applied to the entire coating layer.

12. The method of any one of claims 1 to 10, wherein the liquid treatment composition is applied to the coating layer in form of a preselected pattern, preferably in form of channels, barriers, arrays, one-dimensional bar codes, two-dimensional bar codes, three-dimensional bar codes, security marks, numbers, letters, images, or designs.

13. The method of any one of the preceding claims, wherein the method further comprises a step c) of applying a protective layer above the at least one surface-modified region.

14. The method of any one of the preceding claims, wherein the at least one surface-modified region obtained in step b) is washed or rinsed.

15. A surface-modified material obtainable by a method according to any one of claims 1 to 14.

16. The surface-modified material of claim 15, wherein the surface modified material is a tool for bioassays, a microfluidic device, a lab-on-a-chip device, a paper-based analytical and/or diagnostical tool, a separation platform, a print medium, a packaging material, a wall paint, a bar code, or a data storage.

17. Use of a surface-modified material according to claims 15 or 16 in printing applications, in analytical applications, in diagnostic applications, in bioassays, in chemical applications, in electrical applications, in security devices, in overt or covert security elements, in brand protection, in microlettering, in micro imaging, in decorative, artistic, or visual applications, or in packaging applications.

## Patentansprüche

1. Verfahren zur Herstellung eines oberflächenmodifizierten Materials, umfassend die folgenden Schritte:
a) Bereitstellen von einem Substrat, wobei das Substrat auf wenigstens einer Seite eine Beschichtungsschicht umfasst, die eine salzbildende Alkali- oder Erdalkaliverbindung umfasst, und
b) Aufbringen von einer flüssigen Behandlungszusammensetzung, die eine Säure umfasst, auf wenigstens eine Region der Beschichtungsschicht unter Bildung wenigstens einer oberflächenmodifizierten Region auf und/oder innerhalb der Beschichtungsschicht.

2. Verfahren nach Anspruch 1, bei dem das Substrat von Schritt a) hergestellt wird durch
i) Bereitstellen von einem Substrat,
ii) Aufbringen von einer Beschichtungsschicht, die eine salzbildende Alkali- oder Erdalkaliverbindung umfasst, auf wenigstens einer Seite des Substrats unter Bildung einer Beschichtungsschicht, und
iii) Trocknen der Beschichtungsschicht.

3. Verfahren nach einem der vorhergehenden Ansprüche, bei dem das Substrat ausgewählt ist aus der Gruppe umfassend Papier, Karton, Wellpappe, Kunststoff, Zellophan, Gewebe, Holz, Metall, Glas, Glimmerplatten, Nitrozellulose, oder Beton, bevorzugt Papier, Karton, Wellpappe, oder Kunststoff.

4. Verfahren nach einem der vorhergehenden Ansprüche, bei dem die salzbildende Alkali- oder Erdalkaliverbindung ein Alkali- oder Erdalkalioxid, ein Alkali- oder Erdalkalihydroxid, ein Alkali- oder Erdalkalialkoxid, ein Alkali- oder Erdalkalimethylcarbonat, ein Alkali- oder Erdalkalihydroxycarbonat, ein Alkali- oder Erdalkalibicarbonat, ein Alkali- oder Erdalkalicarbonat, oder ein Gemisch davon ist, bevorzugt ist die salzbildende Alkali- oder Erdalkaliverbindung ein Alkali- oder Erdalkalicarbonat, das bevorzugt ausgewählt ist aus Lithiumcarbonat, Natriumcarbonat, Kaliumcarbonat, Magnesiumcarbonat, Calciummagnesiumcarbonat, Calciumcarbonat, oder Gemischen davon, bevorzugter ist die salzbildende Alkali- oder Erdalkaliverbindung Calciumcarbonat, und am meisten bevorzugt ist die salzbildende Alkali- oder Erdalkaliverbindung ein vermahlenes Calciumcarbonat, ein gefälltes Calciumcarbonat und/oder ein oberflächenbehandeltes Calciumcarbonat.

5. Verfahren nach einem der vorhergehenden Ansprüche, bei dem die salzbildende Alkali- oder Erdalkaliverbindung in der Form von Partikeln mit einer gewichtsgemittelten Partikelgrösse *d*₅₀ von 15 nm bis 200 µm ist, bevorzugt von 20 nm bis 100 µm, bevorzugter von 50 nm bis 50 µm, und am meisten bevorzugt von 100 nm bis 2 µm.

6. Verfahren nach einem der vorhergehenden Ansprüche, bei dem die Beschichtungsschicht ferner ein Bindemittel umfasst, bevorzugt in einer Menge von 1 bis 50 Gew.-%, bezogen auf das Gesamtgewicht der salzbildenden Alkali- oder Erdalkaliverbindung, bevorzugt von 3 bis 30 Gew.-%, und bevorzugter von 5 bis 15 Gew.-%.

7. Verfahren nach einem der vorhergehenden Ansprüche, bei dem die Säure ausgewählt ist aus der Gruppe bestehend aus Salzsäure, Schwefelsäure, schwefliger Säure, Phosphorsäure, Zitronensäure, Oxalsäure, Essigsäure, Ameisensäure, Sulfaminsäure, Weinsäure, Phytinsäure, Borsäure, Bernsteinsäure, Korksäure, Benzoesäure, sowie Gemischen davon, bevorzugt ist die Säure ausgewählt aus der Gruppe bestehend aus Salzsäure, Schwefelsäure, schwefliger Säure, Phosphorsäure, Oxalsäure, Borsäure, Korksäure, Bernsteinsäure, Sulfaminsäure, Weinsäure, oder Gemischen davon, bevorzugter ist die Säure ausgewählt aus der Gruppe bestehend aus Schwefelsäure, Phosphorsäure, Borsäure, Korksäure, Sulfaminsäure, Weinsäure, oder Gemischen davon, und am meisten bevorzugt ist die Säure Phosphorsäure.

8. Verfahren nach einem der vorhergehenden Ansprüche, bei dem die flüssige Behandlungszusammensetzung ferner umfasst eine Druckfarbe, eine Pigmenttinte, einen Farbstoff, ein Färbemittel, Metallionen, Übergangsmetallionen, ein Netzmittel, ein Dispergierungsmittel, ein Biozid, ein Korrosionsschutzmittel, ein Arzneimittel, ein Hydrophobierungsmittel, ein Wachs, ein Salz, ein Polymer, einen Schmelzklebstoff, und/oder eine Polymerisierungszusammensetzung.

9. Verfahren nach einem der vorhergehenden Ansprüche, bei dem die flüssige Behandlungszusammensetzung die Säure in einer Menge von 0,1 bis 100 Gew.-% umfasst, bezogen auf das Gesamtgewicht der flüssigen Zusammensetzung, bevorzugt in einer Menge von 1 bis 80 Gew.-%, bevorzugter in einer Menge von 2 bis 50 Gew.-%, und am meisten bevorzugt in einer Menge von 5 bis 30 Gew.%.

10. Verfahren nach einem der vorhergehenden Ansprüche, bei dem die flüssige Behandlungsschicht aufgebracht wird durch Sprühbeschichten, Tintenstrahldrucken, Offsetdruck, Flexodruck, Siebdruck, Plotten, Kontaktprägen, Rotationstiefdruck, Schleuderbeschichten, Umkehrtiefdruck, Schlitzbeschichten, Vorhangbeschichten, Gleitbettbeschichten, Leimpresse, Filmpresse, Rakelbeschichten, Bürstenstreichen, und/oder einen Stift, bevorzugt durch Tintenstrahldrucken oder Sprühbeschichten.

11. Verfahren nach einem der vorhergehenden Ansprüche, bei dem die flüssige Behandlungszusammensetzung kontinuierlich auf die gesamte Beschichtungsschicht aufgebracht wird.

12. Verfahren nach einem der Ansprüche 1 bis 10, bei dem die flüssige Behandlungszusammensetzung auf die Beschichtungsschicht in der Form eines vorgewählten Musters aufgebracht wird, bevorzugt in der Form von Kanälen, Barrieren, Arrays, eindimensionalen Strichcodes, zweidimensionalen Strichcodes, dreidimensionalen Strichcodes, Sicherheitsmarkierungen, Zahlen, Buchstaben, Bildern, oder Designs.

13. Verfahren nach einem der vorhergehenden Ansprüche, bei dem das Verfahren ferner einen Schritt c) umfasst, bei dem eine Schutzschicht über die wenigstens eine oberflächenmodifizierte Region aufgebracht wird.

14. Verfahren nach einem der vorhergehenden Ansprüche, bei dem die in Schritt b) erhaltene wenigstens eine oberflächenmodifizierte Region gewaschen oder gespült wird.

15. Oberflächenmodifiziertes Material, erhältlich durch ein Verfahren gemäss einem der Ansprüche 1 bis 14.

16. Oberflächenmodifiziertes Material nach Anspruch 15, bei dem das oberflächenmodifizierte Material ein Bioassaytool, ein Mikrofluidelement, eine Westentaschenlaborvorrichtung, ein papierbasiertes Analyse- und/oder Diagnosetool, eine Trennungsplattform, ein Druckerzeugnis, ein Verpackungsmaterial, eine Wandfarbe, ein Strichcode oder ein Datenspeicher ist.

17. Verwendung eines oberflächenmodifizierten Materials gemäss den Ansprüchen 15 oder 16 in Druckanwendungen, in Analyseanwendungen, in Diagnoseanwendungen, in Bioassays, in chemischen Anwendungen, in elektrischen Anwendungen, in Sicherheitsvorrichtungen, in offenen oder verdeckten Sicherheitselementen, beim Markenschutz, bei der Mikrobeschriftung, bei der Mikroabbildung, in dekorativen, künstlerischen oder visuellen Anwendungen, oder in Verpackungsanwendungen.

## Revendications

1. Procédé de production d'un matériau modifié en surface, comprenant les étapes suivantes consistant à :
a) fournir un substrat, le substrat comprenant sur au moins un côté une couche de revêtement comprenant un composé alcalin ou alcalino-terreux salifiable, et
b) appliquer une composition de traitement liquide comprenant un acide sur au moins une région de la couche de revêtement pour former au moins une région modifiée en surface sur et/ou dans la couche de revêtement.

2. Procédé selon la revendication 1, dans lequel le substrat de l'étape a) est préparé par
i) fournir d'un substrat,
ii) application d'une composition de revêtement comprenant un composé alcalin ou alcalino-terreux salifiable sur au moins un côté du substrat pour former une couche de revêtement, et
iii) sécher la couche de revêtement.

3. Procédé selon l'une quelconque des revendications précédentes, dans lequel le substrat est choisi dans le groupe comprenant le papier, le carton, le carton-caisse, le plastique, la cellophane, le textile, le bois, le métal, le verre, la plaque de mica, la nitrocellulose ou le béton, de préférence le papier, le carton, le carton-caisse, ou le plastique.

4. Procédé selon l'une quelconque des revendications précédentes, dans lequel le composé alcalin ou alcalino-terreux salifiable est un oxyde alcalin ou alcalino-terreux, un hydroxyde alcalin ou alcalino-terreux, un alcoxyde alcalin ou alcalino-terreux, un carbonate de méthyle alcalin ou alcalino-terreux, un hydroxycarbonate alcalin ou alcalino-terreux, un bicarbonate alcalin ou alcalino-terreux, un carbonate alcalin ou alcalino-terreux ou des mélanges de ceux-ci, de préférence le composé alcalin ou alcalino-terreux salifiable est un carbonate alcalin ou alcalino-terreux qui est de préférence choisi parmi le carbonate de lithium, le carbonate de sodium, le carbonate de potassium, le carbonate de magnésium, le carbonate de calcium magnésium, le carbonate de calcium, ou des mélanges de ceux-ci, de préférence le composé alcalin ou alcalino-terreux salifiable est le carbonate de calcium, et de manière préférée entre toutes le composé alcalin ou alcalino-terreux salifiable est un carbonate de calcium broyé, un carbonate de calcium précipité et/ou un carbonate de calcium traité en surface.

5. Procédé selon l'une quelconque des revendications précédentes, dans lequel le composé alcalin ou alcalino-terreux salifiable est sous la forme de particules ayant une taille de particule médiane en poids *d₅₀* de 15 nm à 200 µm, de préférence de 20 nm à 100 µm, plus préférablement de 50 nm à 50 µm, et de manière préférée entre toutes de 100 nm à 2 µm.

6. Procédé selon l'une quelconque des revendications précédentes, dans lequel la couche de revêtement comprend en outre un liant, de préférence en une quantité de 1 à 50 % en poids, par rapport au poids total du composé alcalin ou alcalino-terreux salifiable, de préférence de 3 à 30 % en poids, et plus préférablement de 5 à 15 % en poids.

7. Procédé selon l'une quelconque des revendications précédentes, dans lequel l'acide est choisi dans le groupe constitué par l'acide chlorhydrique, l'acide sulfurique, l'acide sulfureux, l'acide phosphorique, l'acide citrique, l'acide oxalique, l'acide acétique, l'acide formique, l'acide sulfamique, l'acide tartrique, l'acide phytique, l'acide borique, l'acide succinique, l'acide subérique, l'acide benzoïque, et des mélanges de ceux-ci, de préférence l'acide est choisi dans le groupe constitué par l'acide chlorhydrique, l'acide sulfurique, l'acide sulfureux, l'acide phosphorique, l'acide oxalique, l'acide borique, l'acide subérique, l'acide succinique, l'acide sulfamique, l'acide tartrique, ou des mélanges de ceux-ci, plus préférablement l'acide est choisi dans le groupe constitué par l'acide sulfurique, l'acide phosphorique, l'acide borique, l'acide subérique, l'acide sulfamique, l'acide tartrique, ou des mélanges de ceux-ci, et de manière préférée entre toutes, l'acide est l'acide phosphorique.

8. Procédé selon l'une quelconque des revendications précédentes, dans lequel la composition de traitement liquide comprend en outre une encre d'impression, une encre pigmentée, un colorant, une teinture, des ions métalliques, des ions de métaux de transition, un tensioactif, un dispersant, un biocide, un inhibiteur de corrosion, un agent pharmaceutique, un agent hydrophobisant, une cire, un sel, un polymère, un composé thermofusible et/ou une composition de polymérisation.

9. Procédé selon l'une quelconque des revendications précédentes, dans lequel la composition de traitement liquide comprend l'acide en une quantité de 0,1 à 100 % en poids, par rapport au poids total de la composition liquide, de préférence en une quantité de 1 à 80 % en poids, plus préférablement en une quantité de 2 à 50 % en poids, et de manière préférée entre toutes en une quantité de 5 à 30 % en poids.

10. Procédé selon l'une quelconque des revendications précédentes, dans lequel la composition de traitement liquide est appliquée par revêtement par pulvérisation, impression à jet d'encre, impression offset, impression flexographique, sérigraphie, traçage, estampage par contact, impression par héliogravure, revêtement par centrifugation, revêtement par gravure inverse, revêtement par fente, revêtement au rideau, revêtement par lit coulissant, presse à film, presse à film dosé, revêtement à la lame, revêtement à la brosse et/ou au crayon, de préférence par impression à et d'encre ou revêtement par pulvérisation.

11. Procédé selon l'une quelconque des revendications précédentes, dans lequel la composition de traitement liquide est appliquée de manière continue sur toute la couche de revêtement.

12. Procédé selon l'une quelconque des revendications 1 à 10, dans lequel la composition de traitement liquide est appliquée sur la couche de revêtement sous la forme d'un motif prédéfini, de préférence sous la forme de canaux, barrières, tableaux, codes-barres à une dimension, codes-barres en deux dimensions, codes-barres en trois dimensions, marques de sécurité, chiffres, lettres, images ou dessins.

13. Procédé selon l'une quelconque des revendications précédentes, dans lequel le procédé comprend en outre une étape c) consistant à appliquer une couche protectrice au-dessus de la région modifiée en surface.

14. Procédé selon l'une quelconque des revendications précédentes, dans lequel la région modifiée en surface obtenue dans l'étape b) est lavée ou rincée.

15. Matériau modifié en surface pouvant être obtenu par le procédé selon l'une quelconque des revendications 1 à 14.

16. Matériau modifié en surface selon la revendication 15, dans lequel le matériau modifié en surface est un outil pour biodosages, un dispositif microfluidique, un dispositif de laboratoire sur puce, un outil d'analyse et/ou de diagnostic à base de papier, une plate-forme de séparation, un support d'impression, un matériau d'emballage, une peinture murale, un code-barres ou un stockage de données.

17. Utilisation d'un matériau modifié en surface selon la revendication 15 ou 16 dans des applications d'impression, des applications analytiques, des applications de diagnostic, des biodosages, des applications chimiques, des applications électriques, des dispositifs de sécurité, des éléments de sécurité visibles ou invisible, la protection de marques, les microcaractères, la microimagerie, les applications décoratives, artistiques ou visuelles, ou les applications d'emballage.
